(19) Europäisches Patentamt / European Patent Office / Office européen des brevets

(11) **EP 3 879 236 B1**

(12) **EUROPEAN PATENT SPECIFICATION**

(45) Date of publication and mention
of the grant of the patent:
**06.03.2024 Bulletin 2024/10**

(21) Application number: **20197145.4**

(22) Date of filing: **21.09.2020**

(51) International Patent Classification (IPC):
*G01F 1/32* (2022.01)     *G01F 1/325* (2022.01)
*G01F 25/10* (2022.01)

(52) Cooperative Patent Classification (CPC):
**G01F 1/32; G01F 1/3209; G01F 1/3287;**
**G01F 25/10**

(54) **METHOD FOR ESTIMATING A FLOW RATE USING A VORTEX FLOW METER**

VERFAHREN ZUM ABSCHÄTZEN EINER DURCHFLUSSMENGE MIT EINEM
WIRBELDURCHFLUSSMESSER

PROCÉDÉ D'ESTIMATION D'UN DÉBIT À L'AIDE D'UN DÉBITMÈTRE À EFFET VORTEX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2020 EP 20162352**

(43) Date of publication of application:
**15.09.2021 Bulletin 2021/37**

(73) Proprietor: **HUBA CONTROL AG
5436 Würenlos (CH)**

(72) Inventor: **Stammeier, Mathias
8049 Zürich (CH)**

(74) Representative: **Schaad, Balass, Menzl & Partner
AG
Bellerivestrasse 20
Postfach
8034 Zürich (CH)**

(56) References cited:
CN-B- 105 571 659     US-A1- 2004 244 499
US-A1- 2006 217 899     US-A1- 2011 314 929
US-A1- 2015 122 049     US-A1- 2018 023 986

• **DRING A L ET AL: "Integrated on-line
multisensing of fluid flow using a mechanical
resonator", SENSORS AND ACTUATORS A:
PHYSICAL, ELSEVIER BV, NL, vol. 85, no. 1-3, 25
August 2000 (2000-08-25), pages 275-279,
XP004214483, ISSN: 0924-4247, DOI:
10.1016/S0924-4247(00)00429-5**

**Description**

Background

The present disclosure relates to metering a flow of a process fluid. More specifically, the present disclosure focuses on a flow meter sensing a plurality of parameters of fluid flow.

Flow meters such as vortex flow meters are commonly employed to record flow signals in appliances for heating, ventilation and/or air conditioning. A flow meter can, for instance, record flow of a fluid such as water or glycol through a flux calorimeter. A quantity indicative of heat transfer can then be derived from the recorded flow and/or from additional measurements of temperature.

A patent application WO1991/010114A1 was filed by FOXBORO CO on 19 December 1990. The application claims a priority of 22 December 1989 and was published on 11 July 1991. WO1991/010114A1 teaches a piezoelectric differential pressure vortex sensor.

FIG 4 of WO1991/010114A1 shows a circuit 78 for detecting vortices. The circuit comprises crystal capacitors $C_{ca}$ and $C_{cb}$ as well as crystal resistors $R_{ca}$ and $R_{cb}$. A circuit 92 comprising the capacitors $C_{ca}$ and $C_{cb}$ as well as resistors $R_{ca}$ and $R_{cb}$ connects to a charge amplifier 93 via a node 105. An operational amplifier 102 produces an output voltage $V_{out}$ that is proportional to a net charge across the crystals. The application WO1991/010114A1 teaches measurement of the voltage signal $V_{out}$ to indicate a frequency of vortices.

A patent application WO2011/119420A2 was filed by AVGI ENGINEERING INC and SGOURAKES GEORGE E on 18 March 2011. The application claims a priority of 23 March 2010 and was published on 29 September 2011. WO2011/119420A2 deals with a vortex flow meter.

WO2011/119420A2 shows in FIG 6 a differential force sensor with sides A and B. A beam 31 applies forces to pads 27A and 27B on either side of the differential force sensor 9 via balls 32A and 32B. A flexure 36 in the middle of the beam 31 absorbs common forces. The two sides A and B produce electric signals of equal level and of opposing phase. The application WO2011/119420A2 teaches determination of a frequency of vortex shedding by comparing signals of vortices on side A with signals of vortices on side B.

A European patent EP0666467B1 issued on 17 October 2001. EP0666467B1 was assigned to FOXBORO CO. An application EP0666467A2 for this patent was filed on 3 February 1995. The application EP0666467A2 claims a priority of 4 February 1994 and deals with a flow measuring apparatus.

FIG 10 of EP0666467B1 teaches alternating vortices that cause process diaphragms 38 and 40 to deflect. The process diaphragms 38 and 40 are arranged on either side of a fluid filled cavity 35. A differential pressure is then transmitted through the fill fluid and deflects a sensing diaphragm 52. An output signal is produced and forwarded to a processing element 82. The processing element 82 determines the amplitude and the frequency of the output signal. EP0666467B1 teaches that fluid velocity and density can be computed from the amplitude and from the frequency of the output signal. In addition to sensing diaphragms 52 and 54, the sensor 14 of EP0666467B1 also comprises an element 106 for sensing a temperature of a process fluid.

Claim 6 of EP0666467B1 pertains to a determination of fluid density d for a liquid. According to claim 6, a fluid density d is computed from a density $d_0$ at a reference temperature $T_0$, from a reference pressure $P_a$, from compressibility and expansion factors $B_1$ and $B_2$, and from a computed pressure $P$ and a computed temperature $T$ as follows:

$$d = d_0 \frac{1 + B_1(P - P_a)}{1 + B_2(T - T_0)}$$

A patent application WO1998/043051A2 was filed by ROSEMOUNT INC, US on 26 March 1998. The application was published on 1 October 1998 and claims a priority of 27 March 1997. WO9843/051A2 deals with a vortex flow meter having signal processing.

A frequency and an amplitude of vortices in a flow meter are monitored according to WO1998/043051A2. The monitored amplitude affords determination of a first density value. Also, a second density value is provided as a function of the monitored temperature.

The publication US2006/0217899 A1 describes the detection of the presence of a second phase component in fluid flow, and the determination of the relative magnitude of each phase in a two-phase gas/liquid flow regime by analysis of the unconditioned sensor signal from a conventional single-phase flowmeter. There is provided a method of monitoring fluid flow in a closed conduit including the disposition of a flowmeter through which the fluid to be monitored flows, generating a signal indicative of at least one characteristic of the fluid flow, measuring the signal components and retaining the fluctuations associated therewith, and analysing the said signal components and fluctuations to determine the at least one characteristic of the fluid flow.

The publication US2011/0314929 A1 describes a method for monitoring and measuring a medium of two phases flowing in a pipeline, of which a first phase, especially a gaseous first phase, has a first density and a second phase, especially a liquid second phase, has a second density different from the first density. The method includes steps of producing Karman vortices in the flowing medium by means of a bluff body at least near a vortex sensor, wherein the vortices are shed by the bluff body with a vortex shedding frequency dependent on an instantaneous flow velocity of the flowing medium; permitting at least a portion of the second phase of the flowing medium to flow along a wall near the vortex sensor; registering periodic pressure fluctuations caused by the Karman vortices in the flowing medium by means of the vortex sensor for producing a sensor signal corresponding to the pressure fluctuations; selecting from the sensor signal a wanted signal component, which has a frequency band, especially a narrow frequency band, containing the vortex shedding frequency, especially a frequency band with a relative bandwidth smaller than 50% of the instantaneous vortex shedding frequency, wherein the instantaneous vortex shedding frequency corresponds to the center frequency of the frequency band, and detecting presence of the second phase of the flowing medium making use of the wanted signal component selected from the sensor signal, especially based on a standard deviation of an amplitude curve of the wanted signal component and/or based on a kurtosis of the wanted signal component.

The publication US2018/0023986 A1 describes a sensor device and method for determining the parameters of fluid flow with a sensor, including an oblong element, extending into fluid flow, fixed mechanically to the body of the sensor device with a flexible link in one end, and a mechanically connected vibration sensor and a data acquisition module connected electrically to the vibration sensor and positioned in the body, which is set to determine the frequency response curve of oscillation caused by liquid flow in the cylindrical element, and to derive the speed and type of fluid flow from the measured frequency response curve.

The publication CN105571659 B describes a vortex street frequency stochastic resonance control detection method based on standard deviation. A stochastic resonance control system uses a control signal with an adjustable frequency and amplitude to process the vortex signal, so that the signal is matched with the system and a random resonance is generated. Using the relationship between the standard deviation of the vortex signal and the signal frequency and amplitude, an estimate of the signal frequency and amplitude is given. Based on this, the control parameters are selected, the adaptive control method is used to obtain the optimal control parameters, and the vortex signal is improved.

The publication US2015/0122049 A1 describes a flow sensor assembly that includes a flow conduit configured to allow fluid flow therethrough and a flow disturber disposed in the flow conduit. The flow disturber is configured to impart a flow disturbance to the fluid flow. The flow sensor assembly further includes a plurality of flow sensors disposed in the flow conduit, wherein the plurality of flow sensors is responsive to flow characteristics in the flow conduit. The flow sensor assembly also includes a frequency resolver coupled to the plurality of flow sensors, wherein the frequency resolver is configured to determine frequency information related to the fluid flow based on the flow characteristics. The frequency resolver uses one or more time sample windows to select data samples from the plurality of flow sensors for use in determining the frequency information, wherein a length of one or more of the time sample windows is based at least in part on the flow characteristics. The flow sensor assembly additionally includes a processor coupled to the plurality of flows sensors and the frequency resolver, wherein the processor is configured to determine a flow rate of the fluid flow in the flow conduit using the frequency information.

The present disclosure improves on vortex flow meters. The instant disclosure confers advantages in terms of a greater dynamic range of the flow meter. More specifically, the instant disclosure enables sensing volume flow far below onset of the Karman vortex street.

Summary

The instant disclosure teaches an analysis of the power spectral density of a signal from a flow sensor. The analysis of power spectral density includes a determination of a frequency that corresponds to a peak in the spectrum. The analysis further includes a determination of the amplitude $S_{peak}$ of that peak in the spectrum. In addition to those characteristics of peak power, a mean intensity S of fluctuations in pressure is determined. A flow rate through the vortex meter is then calculated. The flow rate is calculated based on at least one of the determined peak frequency $f_{peak}$, the determined peak power $S_{peak}$, and/or the determined mean intensity S. The analysis of flow through the valve affords estimates of flow rates below the vortex threshold. At the vortex threshold, a bluff body inside the flow meter starts shedding vortices.

The analysis of pressure fluctuations advantageously involves a plurality of frequency ranges. The frequency ranges can be predefined frequency ranges. The frequency ranges can also be determined during the analysis. The frequency ranges preferably avoid frequencies of disturbances such as 50 Hertz, 60 Hertz, 100 Hertz, 120 Hertz, etc.

The present disclosure also teaches estimates of flow rates and/or measurements of flow rates above and at the vortex threshold. The present disclosure further pertains to estimates of flow rates and/or to measurements of flow rates below the vortex threshold.

The instant disclosure still further enables estimates of flow rates and/or measurements of flow rates based on at least two of:

the determined peak frequency $f_{peak}$,
the determined peak power $S_{peak}$, and/or
the determined mean intensity $S$.

The instant disclosure yet further enables estimates of flow rates and/or measurements of flow rates based on all three of

the determined peak frequency $f_{peak}$,
the determined peak power $S_{peak}$, and

the determined mean intensity $S$.

The instant disclosure also affords consistency checks between flow rates estimated and/or determined from

the determined peak frequency $f_{peak}$,
the determined peak power $S_{peak}$, and/or
the determined mean intensity $S$.

These consistency checks can be used to produce error signals and/or to improve on calibration of the flow meter.

The instant disclosure further leverages synergies between flow rate estimates based on the determined peak frequency $f_{peak}$,

the determined peak power $S_{peak}$, and/or
the determined mean intensity $S$.

The instant disclosure affords use of a single sensor to calibrate a flow meter. That is, the flow meter dispenses with a second flow sensor to be used for calibration purposes.

Brief description of the drawings

Various features will become apparent to those skilled in the art from the following detailed description of the disclosed non-limiting embodiments. The drawings that accompany the detailed description can be briefly described as follows:

FIG 1 is a schematic view of a vortex flow meter according to the instant disclosure.

FIG 2 depicts an alternate flow meter.

FIG 3 illustrates an analysis involving a neural network.

FIG 4 is a plot of a function mapping peak frequencies to flow rates.

FIG 5 is a plot of one or more functions that maps peak mean power intensity from fluctuations to flow rates $Q$ for a variety of fluid temperatures.

FIG 6 is a plot of a function mapping peak power $S_{peak}$ to flow rates $Q$.

FIG 7 shows a power spectral density values for a flow rate $Q$ above the vortex threshold.

Detailed decription

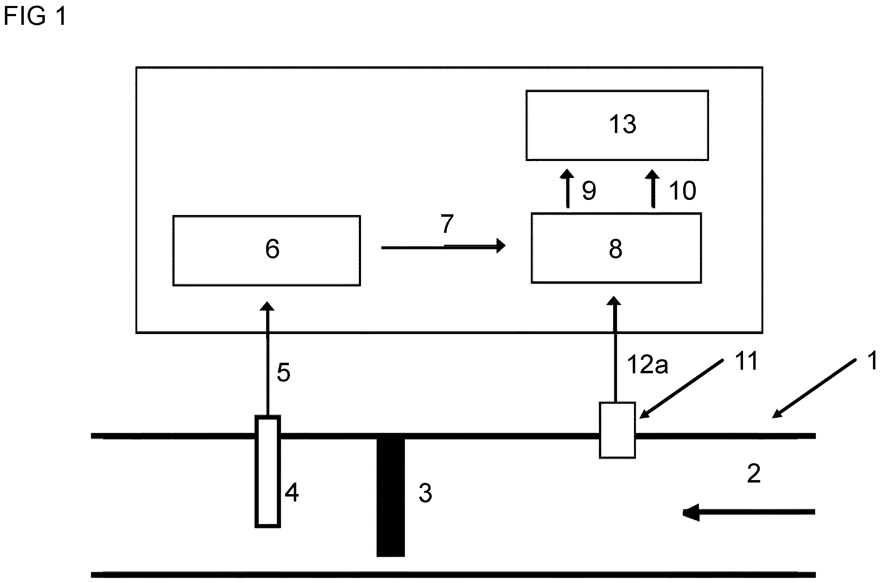

FIG 1 shows a vortex flow meter according to the instant disclosure. The flow meter comprises a conduit (1). A process fluid flows through the conduit (1). A bluff body (3) and a sensor (4) are mounted inside the conduit (1). A flow (2) through the conduit (1) defines a direction of flow. FIG 1 shows the sensor (4) situated downstream from the bluff body (3). It is envisaged that the sensor (4) extends into the conduit (1).

The sensor (4) transmits the flow-induced pressure variations in the form of a raw electrical output signal (5). It is envisaged that the sensor (4) is or comprises a pressure sensor. The measurement circuit (6) preprocesses the raw output signal (5). In so doing, the measurement circuit (6) can, by way of non-limiting examples, amplify and/or filter the output signal (5). The preprocessed signal (7) is then analysed in the analysis circuit (8). In an embodiment, the analysis circuit (8) estimates the flow rate (9) of the process fluid and/or the kinematic viscosity (10) of the process fluid. According to a related aspect, the analysis circuit (8) determines the flow rate (9) of the process fluid and/or the kinematic viscosity (10) of the process fluid.

A temperature sensor (11) is optionally mounted inside the conduit (1). In an embodiment, the temperature sensor (11) extends into the conduit (1). It is also envisaged that the temperature sensor (11) is arranged inside the bluff body (3) and/or inside the sensor (4). In a compact embodiment, the sensor (4) comprises a pressure sensor and the temperature sensor (11). The temperature sensor (11) produces a temperature signal (12a).

The temperature signal (12a) can be used by the analysis circuit (8) to improve on the estimate and/or the determination of the flow rate (9). The temperature signal (12a) can also be used by the analysis circuit (8) to improve on the estimate and/or the determination of the kinematic viscosity (10). The output circuit (13) generates electrical output signals. These electric output signals can, by way of non-limiting examples, relate to the flow rate (9) and/or the kinematic viscosity (10).

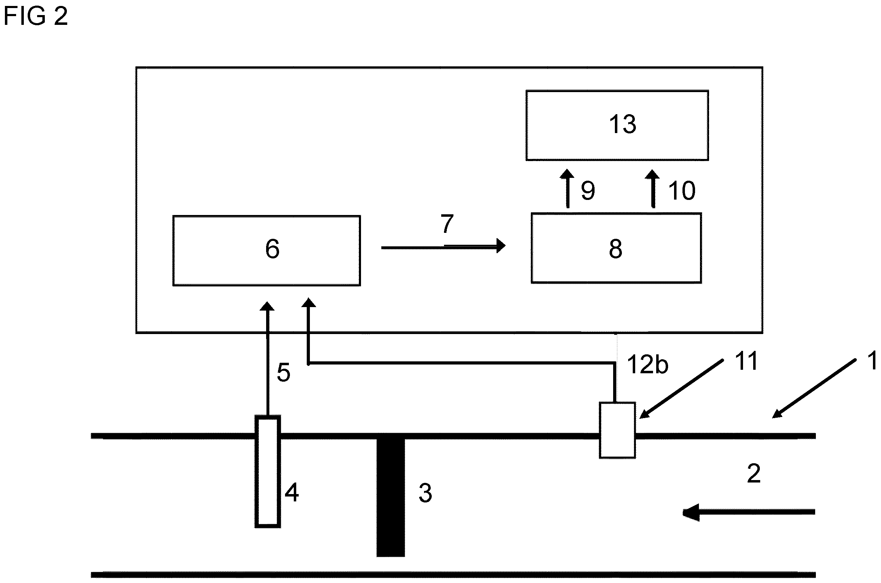

In the embodiment shown in FIG 2, the temperature sensor (11) transmits a temperature signal (12b) to the measurement circuit (6). The measurement circuit (6) can, by way of non-limiting examples, amplify and/or filter the temperature signal (12b). The preprocessed temperature signal (12b) is then transmitted to the analysis circuit (8) and processed as detailed above.

The analysis circuit (8) of the present disclosure analyses the (complete) time-dependent preprocessed signal (7) to estimate and/or to determine the flow rate (9). Besides the frequency of the vortex street, the analysis circuit (8) also analyses the amplitude (and/or the power) at this frequency. Most importantly, it also makes use of the fluctuations (and/or of the noise) in the preprocessed signal (7). The fluctuations and/or the noise of the preprocessed signal (7) correspond to flow-induced pressure fluctuations. Flow-induced fluctuations in pressure afford estimates and/or determinations of the flow rates (9) at low flow rates below the onset of vortex shedding.

In an embodiment, the analysis circuit (8) comprises a microcontroller and/or a microprocessor. The analysis circuit (8) preferably performs a fast Fourier transform of the preprocessed signal (7) to produce a power spectral density and/or a spectral distribution of the signal. According to a special aspect, the analysis circuit (8) performs a fast Fourier transform of the preprocessed signal (7) to produce a frequency-domain series.

The analysis circuit (8) can also multiply the preprocessed signal (7) with itself. The analysis circuit (8) then filters the signal to determine a mean intensity S of pressure fluctuations. The mean intensity S of pressure fluctuations is advantageously determined using a frequency range and/or using a frequency domain. In a special embodiment, the mean intensity $S$ of pressure fluctuations in determined over a plurality of frequency ranges.

The preprocessed signal (7) is advantageously sampled by an analog-to-digital converter to produce a digital signal. In an embodiment, the analysis circuit (8) comprises the analog-to-digital converter. The analysis circuit (8) preferably comprises a microcontroller and the analog-to-digital converter. It is envisaged that the microcontroller and the analog-to-digital converter are arranged on a same system on a chip.

The analysis circuit (8) then performs a fast Fourier transform of the digital signal. The fast Fourier transform of the digital signal represents the power spectral density of the flow-induced pressure variations. The fast Fourier transform of the digital signal preferably comprises a frequency-domain series whilst the digital signal preferably comprises a time-domain signal.

Within this power spectrum, the Kármán vortex street manifests as a peak such as a distinguished peak at a peak frequency $f_{peak}$. At the peak frequency $f_{peak}$, the power spectral density and/or the frequency-domain series has an amplitude and/or a power spectral density $S_{peak}$. The amplitude of the peak will hereinafter be referred to as *peak power.* The amplitude $S_{peak}$ and/or the power spectral density $S_{peak}$ and/or the power peak $S_{peak}$ advantageously is at least one order of magnitude above a noise level. The amplitude $S_{peak}$ and/or the power spectral density $S_{peak}$ and/or the power peak $S_{peak}$ can also be at least two orders of magnitude above the noise level. The noise level of the frequency-domain series is associated and/or corresponds to the pressure fluctuations described above. It is observed that the amplitude $S_{peak}$ and/or the power spectral density $S_{peak}$ and/or the power peak $S_{peak}$ increase monotonously with a flow rate. It is also observed that the level of fluctuations and/ or the noise level in the power spectral density increases monotonously with the flow rate. The flow rate preferably is a volume flow rate such as a volume flow rate associated with a process fluid.

At flow rates above the threshold for vortex shedding, the peak frequency $f_{peak}$ of the Kármán vortex street is derived from the peak in the frequency spectrum.

Likewise, the peak frequency $f_{peak}$ of the Kármán vortex street is derived from the peak in the frequency-domain series. The flow rate $Q_1$ is calculated and/or determined using a linear calibration of flow rate as a function of the peak frequency $f_{peak}$. Additionally, the power peak $S_{peak}$ that corresponds to the vortex street shows a systematic, monotonous dependence on the flow rate. The power peak $S_{peak}$ can thus be leveraged to calculate and/or to determine another independent value of the flow rate $Q_2$. The values of $Q_1$ and $Q_2$ can, for instance, be used to perform consistency checks of the flow measurement system and/or of the flow meter.

There are no distinguished peaks in the frequency spectrum and/or in the frequency-domain series at flow rates below the threshold for vortex shedding. This assumes the absence of electromagnetic interference and the absence of external sources of vibration. Yet the power spectrum and/or the frequency-domain series still reflect the power spectral density of the pressure fluctuations. The flow (2) through the conduit (1) generates such pressure fluctuations when the flow (2) passes the bluff body (3). The power spectrum of the preprocessed signal (7) and/or the frequency-domain series hence depend strongly and systematically on the flow rate.

This correlation can, for instance, be exploited by taking an average value of the power spectral density in a certain frequency range. To that end, the analysis circuit (8) determines a mean intensity $S$ of the pressure fluctuations. The analysis circuit (8) can, by way of non-limiting example, take the mean value of the power spectral density in a plurality of frequency ranges. In an embodiment, the frequency ranges comprise predefined frequency ranges of the power spectrum and/or of the frequency-domain series.

In an embodiment, the mean intensity $S$ is calibrated as a function of the flow rate. According to a related aspect, the mean intensity $S$ is calibrated as a function of the flow rate and of the temperature signal $T$ (12). The analysis circuit (8) uses such calibrations to calculate and/or determine the flow rate $Q_3$ based on $S$. According to a related aspect, the analysis circuit (8) uses such calibrations to calculate and/or determine the flow rate $Q_3$ based on $S$ and based on $T$. This enables the calculation and/or the determination of the flow rate in a range below the threshold for vortex shedding. At flow rates above the vortex threshold, the mean intensity $S$ of pressure fluctuations can be calculated in a similar way or in (substantially) the same way. Also, the flow rate $Q_3$ can be calculated and/or determined from the mean intensity $S$ at flow rates above the vortex threshold. It is envisaged that $Q_3$ is a volume flow rate.

In a preferred embodiment, the frequency ranges such as the predefined frequency ranges are chosen to avoid frequencies, where disturbances are expected. Disturbance in the form of electrodynamic interference are, by way of non-limiting examples, expected at frequencies such as 50 Hertz or 60 Hertz or multiples thereof.

In an alternate embodiment, the frequency ranges are dynamically optimised. The frequency ranges can, by way of non-limiting example, be dynamically optimised in the sense of a self-learning system. The self-learning system relies on measurement data such as data (5, 7, 12a, 12b) originating from the sensors (4, 11). The self-learning system thereby determines an optimum frequency range or a plurality of frequency ranges. It is envisaged that the self-learning system accommodates for the application and/or the actual situation and/or disturbances such as vibrations caused by external sources, electromagnetic interference and/or types of process fluids. It is also envisaged that the self-learning system employs machine learning to dynamically optimise frequency ranges. The self-learning system can comprise an artificial intelligence system.

The dynamic optimisation affords effects of disturbances to be eliminated and/or to be inhibited and/or to be mitigated. One or more frequency ranges are advantageously optimised when a disturbance shows up in the frequency spectrum. One or more frequency ranges are ideally optimised when a disturbance shows up in the frequency-domain series.

It is generally a task of the analysis circuit (8) to determine the flow regime. That is, the analysis circuit (8) determines whether a flow rate of a process fluid inside the conduit (1) is below, at or above a threshold for vortex-shedding. The analysis circuit (8) can also identify and deal with disturbances in the power spectrum and/or in the frequency-domain series. For this purpose, the analysis circuit (8) employs a decision routine. The decision routine can, by way of non-limiting example, work as follows:

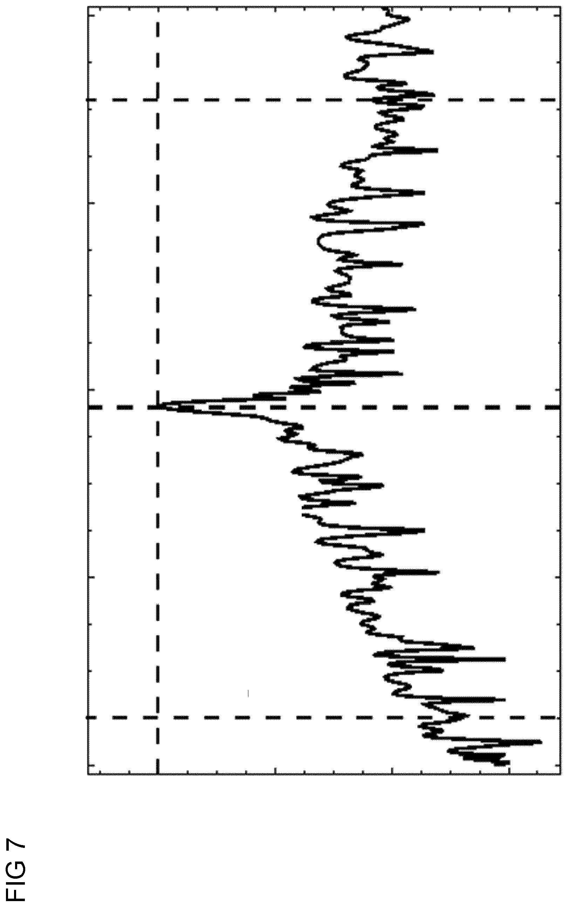

It determines the most distinguished peak (maximal power) in the frequency spectrum and/or in the frequency-domain series. The most distinguished peak preferably corresponds to maximum power. FIG 7 illustrates the peak in the frequency spectrum and/or in the frequency-domain series. It is envisaged that the most distinguished peak is the peak having maximum amplitude. When the power peak $S_{peak}$ is above an empirically defined threshold $S_{min}$ it assumes that the flow rate is at or above the threshold for vortex-shedding. If the power peak $S_{peak}$ equals or is below $S_{min}$, it assumes that the flow rate is below the threshold for vortex-shedding. The threshold $S_{min}$ ideally is a predefined threshold.

If the routine assumes that the flow rate is above the threshold for vortex shedding, it will start a comparison. The analysis circuit (8) will compare the flow rates $Q_1$, $Q_2$ and $Q_3$ among one another. The flow rates $Q_1$, $Q_2$ and $Q_3$ are based on the peak frequency $f_{peak}$, on the power peak $S_{peak}$, and on the mean intensity $S$ of pressure fluctuations. The analysis circuit (8) will also determine whether the flow rates $Q_1$, $Q_2$ and $Q_3$ are consistent.

If all three flow rates agree with one another and/or differ by acceptable error margins, routine will assume a vortex peak. The acceptable error margins preferably are predefined error margins and/or error margins. The flow rate $Q_1$ will in this case be forwarded to the output circuit (13) as the flow rate (9). In a practical embodiment, the flow rate $Q_1$ can be forwarded to the output circuit (13), if at least one flow rate out of $Q_2$ or $Q_3$ agrees with $Q_1$ and/or differs from $Q_1$ by an acceptable error margin. The acceptable error margin preferably is a predetermined error margin. The analysis circuit (8) advantageously also determines a kinematic viscosity (10) such as a kinematic viscosity (10) of the process fluid.

If $Q_2$ and $Q_3$ both differ from $Q_1$ by more than acceptable error margins, the routine will assume a disturbance peak. The analysis circuit (8) may then assume the unlikely event of a strong external disturbance. It will eliminate the measurement data corresponding to the peak frequency from the frequency spectrum and/or from the frequency-domain. The analysis circuit (8) shall again determine the most distinguished peak (maximal power) in the power spectral density and/or in the frequency-domain series. The analysis circuit (8) shall then restart the decision routine described above from the comparison of the most distinguished peak with the predefined threshold $S_{min}$. In so doing, the analysis circuit (8) can accommodate for the assumed disturbance peak. In a special embodiment, the analysis circuit (8) can shift the frequency range such that the range no longer comprises assumed the disturbance peak.

If the routine assumes that the flow rate is below the threshold for vortex shedding, it further analyses the flow rate $Q_3$. If the flow rate $Q_3$ is below or at the threshold for vortex shedding, the flow rate $Q_3$ will be forwarded to the output circuit (13) as the flow rate (9). In the case that $Q_3$ is above or well above the threshold for vortex shedding, an error message will be forwarded to the output circuit (13).

A value of $Q_3$ above the threshold for vortex shedding can, for instance, occur when a vortex peak is misinterpreted as a disturbance. The vortex peak will in this case be eliminated from the spectrum. It follows that there will be no meaningful value of $Q_1$, even though $Q_3$ indicates a flow rate above the threshold for vortex shedding.

A value of $Q_3$ above the threshold for vortex shedding can also occur when one or several minor disturbances substantially increase the mean intensity $S$. Since the flow rate $Q_3$ depends on the mean intensity $S$, a flawed value of $S$ yields a flawed value of $Q_3$.

The analysis circuit (8) ideally produces and saves a list of all frequencies that have been considered disturbances. The analysis circuit (8) can further produce a list of all power peaks that have been considered disturbances. Those disturbances include, but are not limited to, electromagnetic interference and/or external sources of vibrations. The analysis circuit (8) saves such lists for future use. The analysis circuit (8) can save such lists and eliminate the most abundant disturbances from the frequency spectrum and/or from the frequency-domain series. The analysis circuit (8) can also save such lists and shift one or more frequency ranges to exclude and/or to inhibit the most abundant disturbances.

The analysis circuit (8) as described above is capable of measuring flow rates above, at and below the threshold for vortex shedding. Additionally, at flow rates above the threshold for vortex shedding, the analysis circuit (8) also determines the kinematic viscosity (10) of the process fluid. To that end, the analysis circuit (8) calculates the ratio $K$ of the power peak $S_{peak}$ and of a mean value $M$. The mean value $M$ is a mean value of the power spectral density in a frequency range adjacent the power peak. The frequency range does not include the power peak itself. The mean value $M$ is a mean value of the frequency-domain series in a frequency range adjacent the vortex peak. Again, the frequency range does not include the power peak itself. The frequency range adjacent the vortex peak advantageously is narrow.

The values of $S_{peak}$ and $M$ are both proportional to the transmission function of the sensor (4). Hence, the ratio $K$ is independent or substantially independent of the sensor (4). The ratio $K$ represents the total energy contained in the vortex street in proportion to the energy contained in the random motion of the flow. The ratio $K$ depends on the kinematic viscosity ν (10) of the process fluid. Since the kinematic viscosity ν (10) depends on temperature, it can be determined from the ratio $K$ upon a calibration of the its empiric dependence on temperature.

For the measurements of flow rates (9) and of kinematic viscosities (10), the analysis circuit (8) relies on measurements of absolute amplitude and/or on measurements of power. The sensor (4) is required to function reliably and reproducibly for such measurements. Accurate measurements of flow rates (9) and of kinematic viscosities (10) may thus require some level of quality control during manufacturing. Also, a loss of sensitivity of the sensor (4) due to ageing or wear may be an issue.

At flow rates above the threshold for vortex shedding, the analysis circuit (8) can detect such issues related to a loss of sensitivity. The flow rate $Q_1$ only depends on the peak frequency $f_{peak}$. By contrast, the flow rates $Q_2$ and $Q_3$ depend on the sensitivity of the sensor (4). It follows that a loss of sensitivity of the sensor incurs flow rates $Q_2$ and $Q_3$ that are no longer consistent with the flow rate $Q_1$.

According to an aspect of the present disclosure, the analysis circuit (8) can apply a correction to remedy a loss of sensitivity of the sensor (4). It is envisaged to apply such a correction where the loss of sensitivity is determined unambiguously. Unambiguous determination means that other sources of error can be ruled out.

To that end, the analysis circuit (8) enters a self-calibration mode. The self-calibration mode can be activated only for frequencies that exceed the threshold for vortex shedding. The analysis circuit (8) shall then estimate and/or determine the flow rate based on $Q_1$ only. The analysis circuit (8) shall at the same time register the values of the power peak $S_{peak}$ and/or values of the mean intensity $S$ of pressure fluctuations. A small set of triples ($Q$, $S_{peak}$, $S$) can, in principle, suffice to calibrate $Q_2$ and $Q_3$. Empiric dependences of the power peak $P(Q)$ and of the mean intensity $S(Q)$ on a flow rate $Q$ can be employed to calibrate $Q_2$ and $Q_3$.

It is worth that the above description focuses on an embodiment relying on a fast Fourier transform. Yet the disclosure also applies to any mathematically equivalent ways of analysing an (averaged) power spectral density of the preprocessed and raw signals. Mathematically equivalent ways can, for example, comprise a self-multiplication of the preprocessed or raw signal with subsequent averaging and/or filtering. The signal can subsequently be averaged or filtered.

The present disclosure also pertains to a flow control component of a system for heating, ventilation and/or air conditioning. The flow control component comprises a flow meter as shown in FIG 1 and/or in FIG 2. It is envisaged that the flow control component comprises a valve such as a smart valve. The flow control component advantageously comprises a valve member such as a ball-type valve member and/or a poppettype valve member and/or a globe-type valve member.

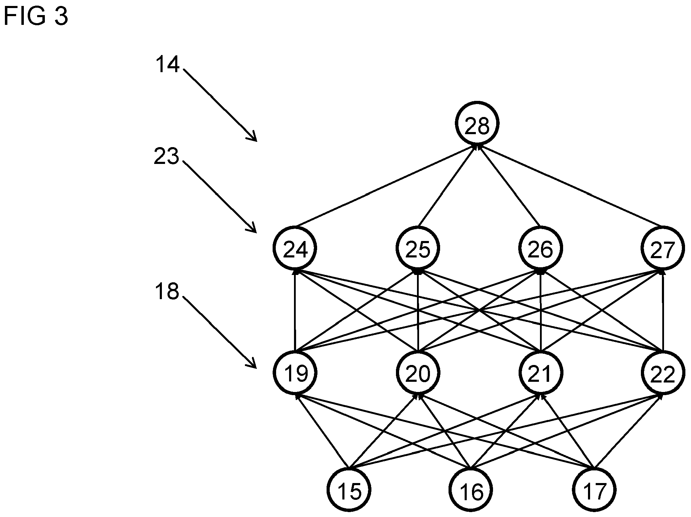

In an embodiment, the analysis circuit (8) implements a neural network such as the network (14) shown in FIG 3. The neural network (14) comprises input neurons (15 - 17). In an embodiment, a first input neuron (15) corresponds to (or is associated with) a peak frequency $f_{peak}$. A second input neuron (16) corresponds to (or is associated with) a peak amplitude $S_{peak}$ and/or a power peak $S_{peak}$ in the frequency-domain series. A third input neuron (17) corresponds to (or is associated with) a mean intensity $S$ of pressure fluctuations. It is envisaged that the neural network (14) comprises additional input neurons for historical values of dissipated heat and/or temperature $T$.

It is also envisaged that the neural network (14) relies on input neurons corresponding to (or being associated with) the frequency-domain series.

Any input to the neural network (14) is ideally normalised. The neural network (14) also comprises an output neuron (28). In an embodiment, the output neuron (28) corresponds to (or is associated with) a flow rate. In another embodiment, the output neuron (28) corresponds to (or is associated with) a kinematic viscosity.

The neural network (14) also comprises one or more hidden layers (18, 23), each layer (18, 23) having one or more hidden neurons (19 - 22, 24 - 27). In an embodiment, the neural network (14) comprises a single layer of hidden neurons. In another embodiment, the neural network (14) comprises two layers (18, 23) of hidden neurons. The neurons (19 - 22, 24 - 27) can, by way of non-limiting example, have activation functions such as sigmoid and/or hyperbolic tangent and/or step-wise activation and/or rectified exponential linear unit functions. The neurons (19 - 22, 24 - 27) are advantageously biased. The neural network (14) is ideally trained under test conditions. A series of measurements obtained under various test conditions is employed to train the neural network (14).

The neural network (14) can, by way of non-limiting example, be trained by a supervised training algorithm such as backpropagation. It is also envisaged that neural network (14) is trained using an evolutionary algorithm such as a genetic algorithm. The skilled artisan can combine training algorithms. A genetic algorithm can, by way of example, be employed to find a coarse estimate of the weights of the connections of neural network (14). A backpropagation algorithm is then employed to further improve on the performance of the network (14).

After training the configuration of neural network (14) and/or the weights of the connections of neural network (14) are saved in a memory of or associated with the analysis circuit (8). The memory preferably is a non-volatile memory. The configuration of the neural network (14) and/or the weights of the connections of the neural network (14) as a whole define a fluid classification scheme employed by the flow meter.

As described in detail herein, the present disclosure teaches a method of estimating a flow rate, the method comprising the steps of:

recording a time-domain series of signals from a sensor (4), the sensor (4) being situated inside and/or extending into a conduit (1) of a vortex flow meter;
producing a time-domain series of values from the time-domain series of signals;
producing a frequency-domain series of values from the time-domain series of values;
determining a peak value $S_{peak}$ of the frequency-domain series, the peak value $S_{peak}$ being the largest value of the frequency-domain series;
producing a first range series of values as a subset of the frequency-domain series of values;
determining a moment value $S$ of the first range series; and
mapping the moment value $S$ of the first range series to a range-derived flow rate, the range-derived flow rate being indicative of the flow rate of a fluid flowing through the conduit (1) of the flow Z meter;
comparing the peak value $S_{peak}$ to a predetermined threshold; and
mapping the peak value $S_{peak}$ to a peak-derived flow rate, if the peak value $S_{peak}$ exceeds the predetermined threshold;
wherein the peak-derived flow rate is indicative of the flow rate of the fluid flowing through the conduit of the flow meter;
the method further comprising the steps of:

if the peak value $S_{peak}$ exceeds the predetermined threshold:
comparing the peak-derived flow rate to the range-derived flow rate;
if the peak-derived flow rate and the range-derived flow rate differ by less than a first error margin:

producing a first output flow rate based on at least one of the peak-derived flow rate and the range-derived flow rate;
producing a first output signal from the first output flow rate, the first output flow rate being indicative of the flow rate of the fluid flowing through the conduit of the flow meter; and
transmitting the first output signal to an output circuit.

The present disclosure also teaches a method of estimating a flow rate, the method comprising the steps of:

recording a time-domain series of signals from a sensor (4), the sensor (4) being situated inside and/or extending into a conduit (1) of a vortex flow meter;
producing a time-domain series of values from the time-domain series of signals;
producing a frequency-domain series of values from the time-domain series of values;
determining a peak value $S_{peak}$ of the frequency-domain series, the peak value $S_{peak}$ being the largest value of the frequency-domain series;
comparing the peak value $S_{peak}$ to a predetermined threshold;
producing a first range series of values as a subset of the frequency-domain series of values while excluding and/or inhibiting the peak value $S_{peak}$ from the first range series, if the peak value $S_{peak}$ exceeds the predetermined threshold;
producing a first range series of values as a subset of the frequency-domain series of values, if the peak value $S_{peak}$ equals or is below the predetermined threshold;
determining a moment value $S$ of the first range series; and
mapping the moment value $S$ of the first range series to a range-derived flow rate, the range-derived flow rate being indicative of the flow rate of a fluid flowing through the conduit (1) of the flow meter. The instant disclosure also teaches any of the aforementioned methods, the method comprising the step of:
producing a first range series of values as a subset of the frequency-domain series of values while excluding and/or inhibiting the peak value $S_{peak}$ from the first range series.

The moment value $S$ of the first range series preferably differs from the peak value $S_{peak}$.

In an embodiment, the method of estimating a flow rate is a method of determining a flow rate. According to a special embodiment, the method of estimating a flow rate is a method of calculating a flow rate. In another embodiment, the method of estimating a flow rate is a method of indicating a flow rate.

It is envisaged that the sensor (4) is a pressure sensor and/or a flow sensor. The sensor (4) preferably produces electric signals from pressures of a fluid such as a process fluid. The sensor (4) yet more preferably is a sensor (4) such as a pressure sensor and/or a flow sensor, the sensor (4) extending into a conduit (1) of a vortex flow meter. It is still envisaged that the sensor (4) is a sensor (4) such as a pressure sensor and/or a flow sensor, the sensor (4) being situated inside a conduit (1) of a vortex flow meter.

The instant disclosure also teaches any of the methods disclosed herein comprising the step of producing a time-domain series of values from the time-domain series of signals by producing for at least two signals of the time-domain series of signals (each) a value of the time-domain series of values. The instant disclosure further teaches any of the methods disclosed herein comprising the step of producing a time-domain series of values from the time-domain series of signals by producing for each signal of the time-domain series of signals (each) a value of the time-domain series of values. The instant disclosure still further teaches any of the methods disclosed herein comprising the step of producing a time-domain series of values from the time-domain series of signals by employing an analog-to-digital converter to produce for at least two signals of the time-domain series of signals (each) a value of the time-domain series of values. The instant disclosure yet further teaches any of the methods disclosed herein comprising the step of producing a time-domain series of values from the time-domain series of signals by employing an analog-to-digital converter to produce for each signal of the time-domain series of signals (each) a value of the time-domain series of values. The method preferably comprises the step of an analog-to-digital converter producing a time-domain series of values from the time-domain series of signals. It is envisaged that the method comprises the step of an analog-to-digital converter of a microcontroller producing a time-domain series of values from the time-domain series of signals. The microcontroller and the analog-to-digital converter are preferably arranged on the same system on a chip. The flow meter ideally comprises the analog-to-digital converter and/or the microcontroller.

The time-domain series of values ideally is a time-domain series of power values. It is envisaged that the power values of the time-domain series are each indicative of power such as electric power. It is still envisaged that the time-domain series of values is a time-domain series of voltage values. It is envisaged that the voltage values of the time-domain series are each indicative of a voltage such as an electric voltage. It is also envisaged that the peak value $S_{peak}$ is a peak amplitude.

In an embodiment, the frequency-domain series of values is produced from the time-domain series of values using a Fourier transform. It is envisaged that an application-specific integrated circuit is employed to produce the frequency-domain series of values from the time-domain series of values, the application-specific integrated circuit being customised for the specific purpose of carrying out a Fourier transform. The flow meter ideally comprises the application-specific integrated circuit customised for the specific purpose of carrying out a Fourier transform. According to a special aspect of the present disclosure, the frequency-domain series of values is produced from the time-domain series of values using a fast Fourier transform. It is envisaged that an application-specific integrated circuit is employed to produce the frequency-domain series of values from the time-domain series of values, the application-specific integrated circuit being customised for the specific purpose of carrying out a fast Fourier transform. The flow meter ideally comprises the application-specific integrated circuit customised for the specific purpose of carrying out a fast Fourier transform.

The frequency-domain series of values advantageously is a frequency-domain series of power values. It is envisaged that the power values of the frequency-domain series are each indicative of power such as electric power. It is still envisaged that the frequency-domain series of values is a frequency-domain series of voltage values. It is envisaged that the voltage values of the frequency-domain series are each indicative of a voltage such as an electric voltage.

The predetermined threshold preferably is at least 10 dBV, yet more preferably at least 20 dBV, still more preferably at least 40 dBV. The predetermined threshold can be a predetermined amplitude. The predetermined threshold is advantageously stored in a memory such as a non-volatile memory of the flow meter. The instant disclosure also teaches any of the methods described herein, wherein the method comprises the step of reading the predetermined threshold from a memory such as the non-volatile memory of the flow meter.

The instant disclosure also pertains to any of the methods described herein, wherein the method comprises the step of producing a first range series of values as a subset of the frequency-domain series of values while applying a band-stop filter and/or a band-rejection filter and/or a notch-filter to exclude and/or to inhibit the peak value $S_{peak}$ from the first range series, if the peak value $S_{peak}$ exceeds the predetermined threshold.

The method advantageously comprises the step of producing a first range series of values, the first range series of values comprising a subset of the values of the frequency-domain series of values. It is envisaged that the first range series comprises less than half as many values as the frequency-domain series. The first range series can comprise less than a quarter of the values of the frequency-domain series or even less than one fifth of the values of the frequency-domain series.

According to an aspect of the present disclosure, the moment value S of the first range series is or comprises a mean value of the first range series. That is, the moment value S of the first range series is or comprises a first moment of the first range series. The method preferably comprises the step of producing a mean value of the first range series by arithmetically averaging the values of the first range series of values. The method ideally comprises the step of calculating and/or of determining a mean value $\mu_1$ of the first range series by averaging the values $x_i$ of the first range series having $N$ values:

$$\mu_1 = \frac{1}{N} \sum_{i=1}^{N} x_i$$

In a special embodiment, the mean value of the first range series is calculated by arithmetically averaging and/or by geometrically averaging the values of the first range series of values.

According to an aspect of the present disclosure, the moment value $S$ of the first range series is or comprises a second moment of the first range series. The method then comprises the step of calculating and/or of determining a moment value $S$ of the first range series by calculating and/or by determining a second moment of the first range series of values. The method can also comprise the step of calculating and/or of determining a moment value $\mu_2$ of the first range series by calculating and/or by determining a second moment of the first range series of values $x_i$, the first range series having $N$ values:

$$\mu_2 = \frac{1}{N} \sum_{i=1}^{N} x_i^2$$

The method can also comprise the step of calculating and/or of determining a moment value $S$ of the first range series, the moment value being a function of a second moment of the first range series of values.

It is envisaged that the range-derived flow rate is a third flow rate. The instant disclosure also pertains to any of the methods described herein, wherein the method comprises the step of employing a third function $Q_3(S)$ to map the moment value $S$ of the first range series to a range-derived flow rate $Q_3$. In an embodiment, the third function $Q_3(S)$ is a monotonic function of the moment value $S$ of the first range series. In a special embodiment, the third function $Q_3(S)$ is an increasing function of the moment value $S$ of the first range series. A logarithmic function $Q_3(S)$ with constants $k_1$, $k_2$, and $Q_{0,3}$

$$Q_3 = k_1(\log S + k_2 \cdot \log S) + Q_{0,3}$$

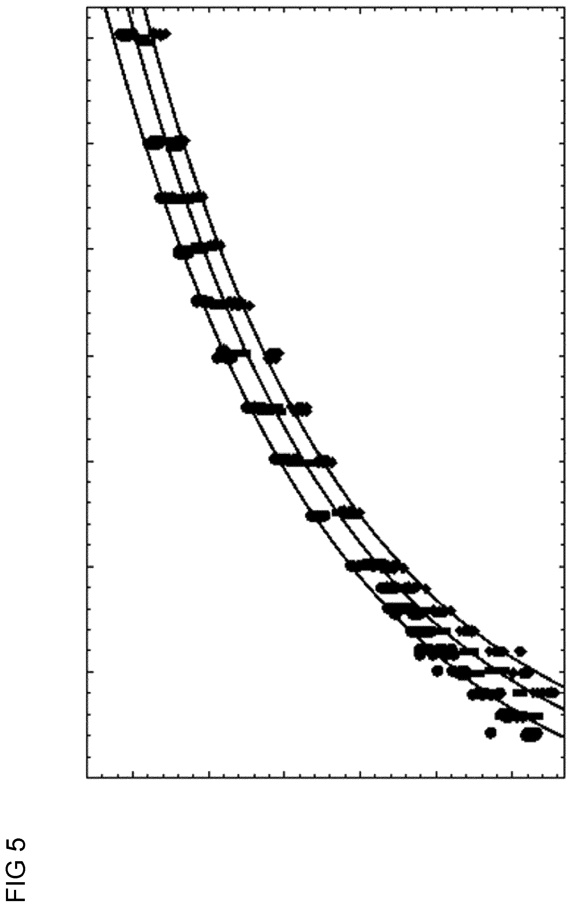

can, by way of non-limiting example, map the moment value $S$ to the range-derived flow rate $Q_3$. A functional relationship between the moment value $S$ and the flow rate $Q_3$ is also illustrated in FIG 5.

In an embodiment, the first range series is a first slot series or a first window series.

According to an aspect of the present disclosure, the range-derived flow rate is a range-based flow rate and/or a slot-derived flow rate. In an embodiment, the range-derived flow rate is indicative of the flow rate of a process fluid flowing through the conduit (1) of the flow meter. According to a special aspect of the instant disclosure, the range-derived flow rate is an estimate of the flow rate of a fluid such as a process fluid flowing through the conduit (1) of the flow meter.

The instant disclosure teaches any of the methods described herein, the method comprising the step of mapping the peak value $S_{peak}$ to a peak-derived flow rate, if the peak value $S_{peak}$ exceeds the predetermined threshold;

wherein the peak-derived flow rate is indicative of the flow rate of the fluid flowing through the conduit (1) of the flow meter.

The instant disclosure still teaches any of the methods described herein, the method comprising the steps of:

comparing the peak value $S_{peak}$ to a predetermined threshold; and
mapping the peak value $S_{peak}$ to a peak-derived flow rate, if the peak value $S_{peak}$ exceeds the predetermined threshold;
wherein the peak-derived flow rate is indicative of the flow rate of the fluid flowing through the conduit (1) of the flow meter.

According to an aspect of the present disclosure, the peak-derived flow rate is a peak-based flow rate. In an embodiment, the peak-derived flow rate is indicative of the flow rate of a process fluid flowing through the conduit (1) of the flow meter. According to a special aspect of the instant disclosure, the peak-derived flow rate is an estimate of the flow rate of a fluid such as a process fluid flowing through the conduit (1) of the flow meter.

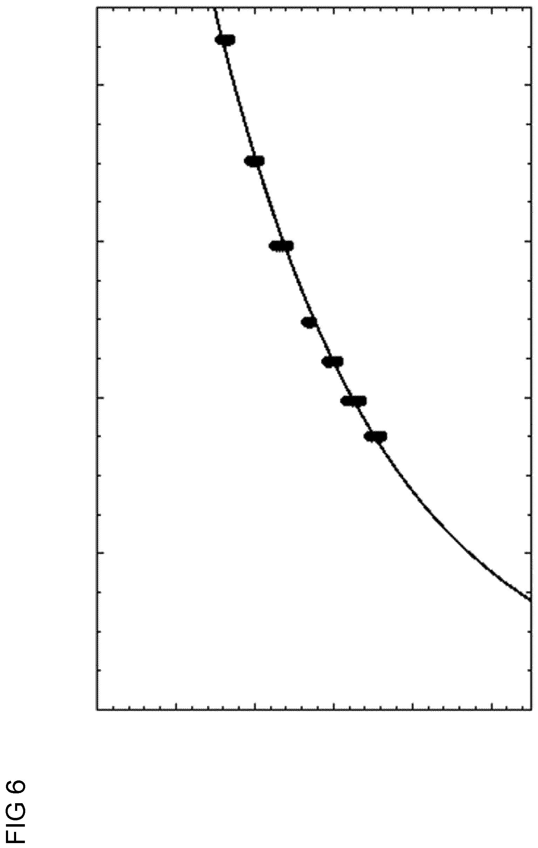

It is envisaged that the peak-derived flow rate is a second flow rate. The instant disclosure also pertains to any of the methods described herein, wherein the method comprises the step of employing a second function $Q_2(S_{peak})$ to map the peak value $S_{peak}$ to a peak-derived flow rate $Q_2$. In an embodiment, the second function $Q_2(S_{peak})$ is a monotonic function of the peak value $S_{peak}$. In a special embodiment, the second function $Q_2(S_{peak})$ is an increasing function of the peak value $S_{peak}$. A functional relationship between the moment value $S$ and the flow rate $Q_2$ is also illustrated in FIG 6.

The instant disclosure teaches any of the methods described herein and involving a peak-derived flow rate, the method comprising the steps of:

if the peak value $S_{peak}$ exceeds the predetermined threshold:

comparing the peak-derived flow rate to the range-derived flow rate;

if the peak-derived flow rate and the range-derived flow rate differ by less than a first error margin:

> producing a first output flow rate based on at least one of the peak-derived flow rate and the range-derived flow rate;
> producing a first output signal from the first output flow rate, the first output flow rate being indicative of the flow rate of the fluid flowing through the conduit (1) of the flow meter; and transmitting the first output signal to an output circuit (13).

The instant disclosure also teaches any of the methods involving a first output flow rate, wherein the method comprises the step of using a predetermined communication bus protocol such as a digital communication bus protocol to transmit the first output signal to an output circuit (13). The flow meter ideally comprises the output circuit (13).

In an embodiment, the first output flow rate is indicative of the flow rate of a process fluid flowing through the conduit (1) of the flow meter. According to a special aspect of the instant disclosure, the first output flow rate is an estimate of the flow rate of a fluid such as a process fluid flowing through the conduit (1) of the flow meter.

The present disclosure also teaches any of the methods described herein and involving a peak-derived flow rate, the method comprising the steps of:

if the peak value $S_{\mathrm{peak}}$ exceeds the predetermined threshold:

> comparing the peak-derived flow rate to the range-derived flow rate;
> if the peak-derived flow rate and the range-derived flow rate differ by less than a first error margin:
>
> > producing a first output flow rate based on at least one of the peak-derived flow rate and the range-derived flow rate; and
> > using the first output flow rate to set a position of a valve member of a valve.

It is envisaged that a method described herein and involving a peak-derived flow rate comprises the step of producing a first output flow rate exclusively as a function of the peak-derived flow rate. The first output flow rate will then not depend on the range-derived flow rate.

It is still envisaged that a method described herein and involving a peak-derived flow rate comprises the step of producing a first output flow rate exclusively as a function of the range-derived flow rate. The first output flow rate will then not depend on the peak-derived flow rate.

It is further envisaged that a method described herein and involving a peak-derived flow rate comprises the step of producing a first output flow rate by averaging the peak-derived flow rate and the range-derived flow rate. In an embodiment, the average of the peak-derived flow rate and the range-derived flow rate is an arithmetic average. In another embodiment, the average of the peak-derived flow rate and the range-derived flow rate is a geometric average.

The instant disclosure further teaches any of the methods described herein and involving a first output flow rate, wherein the method comprises the step of using the first output flow rate to control a position of a valve member of a valve. In a special embodiment, the first output flow rate is used as a set point to control a position of a valve member of a valve.

The present disclosure teaches any of the methods described herein and involving a peak-derived flow rate, the method comprising the steps of:

if the peak value $S_{\mathrm{peak}}$ exceeds the predetermined threshold:

> comparing the peak-derived flow rate to the range-derived flow rate;
> if the peak-derived flow rate and the range-derived flow rate differ by more than a first error margin:
>
> > producing a first error signal; and
> > transmitting the first error signal to an output circuit (13).

The instant disclosure further teaches any of the methods described herein and involving a first error signal, wherein the method comprises the step of using a predetermined communication bus protocol such as a digital communication bus protocol to transmit the first error signal to an output circuit (13). The flow meter ideally comprises the output circuit (13).

The first error margin can, by way of non-limiting example, be two percent or five percent or ten percent of the range-derived flow rate. According to an aspect of the instant disclosure, the first error margin is at least two percent or at least five percent or at least ten percent of the range-derived flow rate. The first error margin can, by way of non-limiting example, be two percent or five percent or ten percent of the peak-derived flow rate. According to an aspect of the instant disclosure, the first error margin is at least two percent or at least five percent or at least ten percent of the peak-derived flow rate.

The present disclosure also teaches any of the methods described herein, wherein the method comprises the steps of:

if the peak value $S_{\mathrm{peak}}$ exceeds the predetermined threshold:

> mapping the peak value $S_{\mathrm{peak}}$ to a kinematic viscosity value v, the kinematic viscosity value v being indicative of a kinematic viscosity of the fluid flowing through the conduit (1) of the flow meter;
> producing a kinematic viscosity signal from the kinematic viscosity value v; and

transmitting the kinematic viscosity signal to an output circuit (13).

The present disclosure still teaches any of the methods described herein, wherein the method comprises the steps of:

comparing the peak value $S_{peak}$ to a predetermined threshold;
if the peak value $S_{peak}$ exceeds the predetermined threshold:

mapping the peak value $S_{peak}$ to a kinematic viscosity value v, the kinematic viscosity value v being indicative of a kinematic viscosity of the fluid flowing through the conduit (1) of the flow meter;
producing a kinematic viscosity signal from the kinematic viscosity value v; and
transmitting the kinematic viscosity signal to an output circuit (13).

The present disclosure further teaches any of the methods described herein, wherein the method comprises the steps of:
if the peak value $S_{peak}$ exceeds the predetermined threshold:

producing a kinematic viscosity value v based on the peak value $S_{peak}$ and based on the moment value S of the first range series, the kinematic viscosity value v being indicative of a kinematic viscosity of the fluid flowing through the conduit (1) of the flow meter;
producing a kinematic viscosity signal from the kinematic viscosity value v; and
transmitting the kinematic viscosity signal to an output circuit (13).

The present disclosure still further teaches any of the methods described herein, wherein the method comprises the steps of:

comparing the peak value $S_{peak}$ to a predetermined threshold;
if the peak value $S_{peak}$ exceeds the predetermined threshold:

producing a kinematic viscosity value v based on the peak value $S_{peak}$ and based on the moment value S of the first range series, the kinematic viscosity value v being indicative of a kinematic viscosity of the fluid flowing through the conduit (1) of the flow meter;
producing a kinematic viscosity signal from the kinematic viscosity value v; and
transmitting the kinematic viscosity signal to an output circuit (13).

The present disclosure also teaches any of the methods described herein and involving a kinematic viscosity signal, wherein the method comprises the step of producing a kinematic viscosity value v by calculating and/or by determining a ratio between the peak value $S_{peak}$ and the moment value S of the first range series. In an embodiment, the kinematic viscosity value v is produced as a function of a ratio between the peak value $S_{peak}$ and the moment value S of the first range series. In a special embodiment, the kinematic viscosity value v is produced as a ratio between the peak value $S_{peak}$ and the moment value S of the first range series.

The instant disclosure teaches any of the methods described herein, wherein the method comprises the steps of:
if the peak value $S_{peak}$ exceeds the predetermined threshold:

producing a second range series of values as a subset of the frequency-domain series of values;
wherein the second range series differs from the first range series;
determining a moment value M of the second range series;
producing a kinematic viscosity value v based on the peak value $S_{peak}$ and based on the moment value M of the second range series, the kinematic viscosity value v being indicative of a kinematic viscosity of the fluid flowing through the conduit (1) of the flow meter;
producing a kinematic viscosity signal from the kinematic viscosity value v; and
transmitting the kinematic viscosity signal to an output circuit (13).

The instant disclosure further teaches any of the methods described herein, wherein the method comprises the steps of:

comparing the peak value $S_{peak}$ to a predetermined threshold;
if the peak value $S_{peak}$ exceeds the predetermined threshold:

producing a second range series of values as a subset of the frequency-domain series of values;
wherein the second range series differs from the first range series;
determining a moment value M of the second range series;
producing a kinematic viscosity value v based on the peak value $S_{peak}$ and based on the moment value M of the second range series, the kinematic viscosity value v being indicative of a kinematic viscosity of the fluid flowing through the conduit (1) of the flow meter;
producing a kinematic viscosity signal from the kinematic viscosity value v; and
transmitting the kinematic viscosity signal to an output circuit (13).

The instant disclosure further teaches any of the methods described herein, wherein the method comprises the steps of:

comparing the peak value $S_{peak}$ to a predetermined threshold;
if the peak value $S_{peak}$ exceeds the predetermined threshold:

producing a second range series of values as a subset of the frequency-domain series of values while excluding and/or inhibiting the peak value $S_{peak}$ from the second range series;
wherein the second range series differs from the first range series;
determining a moment value $M$ of the second range series;
producing a kinematic viscosity value v based on the peak value $S_{peak}$ and based on the moment value $M$ of the second range series, the kinematic viscosity value v being indicative of a kinematic viscosity of the fluid flowing through the conduit (1) of the flow meter;
producing a kinematic viscosity signal from the kinematic viscosity value v; and
transmitting the kinematic viscosity signal to an output circuit (13).

According to an aspect of the present disclosure, the moment value $M$ of the second range series is or comprises a mean value of the second range series. That is, the moment value $M$ of the second range series is or comprises a first moment of the second range series. The method preferably comprises the step of producing a mean value of the second range series by arithmetically averaging the values of the second range series of values. The method ideally comprises the step of calculating and/or of determining a mean value $\mu_1$, of the second range series by averaging the values $x_i$ of the second range series having $N$ values:

$$\mu_1 = \frac{1}{N} \sum_{i=1}^{N} x_i$$

In a special embodiment, the mean value of the second range series is calculated by arithmetically averaging and/or by geometrically averaging the values of the second range series of values.

According to an aspect of the present disclosure, the moment value $M$ of the second range series is or comprises a second moment of the second range series. The method then comprises the step of calculating and/or of determining a moment value $M$ of the second range series by calculating and/or by determining a second moment of the second range series of values. The method can also comprise the step of calculating and/or of determining a moment value $\mu_2$ of the second range series by calculating and/or by determining a second moment of the second range series of values $x_i$, the second range series having $N$ values:

$$\mu_2 = \frac{1}{N} \sum_{i=1}^{N} x_i^2$$

The method can also comprise the step of calculating and/or of determining a moment value $M$ of the second range series, the moment value being a function of a second moment of the second range series of values.

The present disclosure also teaches any of the methods described herein and involving a kinematic viscosity signal, wherein the method comprises the step of producing a kinematic viscosity value v by calculating and/or by determining a ratio $K$ between the peak value $S_{peak}$ and the moment value $M$ of the second range series. In an embodiment, the kinematic viscosity value v is produced as a function of a ratio $K$ between the peak value $S_{peak}$ and the moment value $M$ of the second range series. In a special embodiment, the kinematic viscosity value v is produced as a ratio between the peak value $S_{peak}$ and the moment value $M$ of the second range series.

In an embodiment, the second range series is a second slot series or a second window series.

The instant disclosure also teaches any of the methods described herein and involving a kinematic viscosity signal, wherein the method comprises the step of using a predetermined communication bus protocol such as a digital communication bus protocol to transmit the kinematic viscosity signal to an output circuit (13). The flow meter ideally comprises the output circuit (13).

In an embodiment, the kinematic viscosity value v is indicative of a kinematic viscosity of a process fluid flowing through the conduit (1) of the flow meter. According to a special aspect of the instant disclosure, the kinematic viscosity value v is an estimate of a kinematic viscosity of a fluid such as a process fluid flowing through the conduit (1) of the flow meter.

The present disclosure teaches any of the methods described herein, wherein the frequency-domain series comprises a series of frequencies and a series of values;

wherein each value of the frequency-domain series is associated with a frequency of the frequency-domain series;
the method comprising the steps of:

comparing the peak value $S_{peak}$ to a predetermined threshold;

if the peak value $S_{peak}$ exceeds the predetermined threshold:

identifying a peak frequency $f_{peak}$ as a frequency of the frequency-domain series that is associated with the peak value $S_{peak}$; and mapping the peak frequency $f_{peak}$ to a frequency-derived flow rate, the frequency-derived flow rate being indicative of the flow rate of the fluid flowing through the conduit (1) of the flow meter.

The present disclosure also teaches any of the methods described herein,

wherein the frequency-domain series comprises a series of frequencies and a series of values;
wherein each value of the frequency-domain series corresponds to a frequency of the frequency-domain series;
the method comprising the steps of:

comparing the peak value $S_{peak}$ to a predetermined threshold;
if the peak value $S_{peak}$ exceeds the predetermined threshold:

identifying a peak frequency $f_{peak}$ as a frequency of the frequency-domain series that corresponds to the peak value $S_{peak}$; and mapping the peak frequency $f_{peak}$ to a frequency-derived flow rate, the frequency-derived flow rate being indicative of the flow rate of the fluid flowing through the conduit (1) of the flow meter.

The present disclosure further teaches any of the methods described herein,

wherein the frequency-domain series comprises a series of frequencies and a series of values;
wherein each value of the frequency-domain series is associated with a frequency of the frequency-domain series;
the method comprising the steps of:

comparing the peak value $S_{peak}$ to a predetermined threshold;
if the peak value $S_{peak}$ exceeds the predetermined threshold:

identifying a peak frequency $f_{peak}$ as a frequency of the frequency-domain series that is associated with the peak value $S_{peak}$; and mapping the peak frequency $f_{peak}$ to a frequency-derived flow rate, the frequency-derived flow rate being indicative of the flow rate of the fluid flowing through the conduit (1) of the flow meter.

According to an aspect of the present disclosure, the frequency-derived flow rate is a frequency-based flow rate. In an embodiment, the frequency-derived flow rate is indicative of the flow rate of a process fluid flowing through the conduit (1) of the flow meter. According to a special aspect of the instant disclosure, the frequency-derived flow rate is an estimate of the flow rate of a fluid such as a process fluid flowing through the conduit (1) of the flow meter.

According to an aspect of the present disclosure, each value of the frequency-domain series corresponds to a frequency of the frequency-domain series. The frequencies of the frequency-domain series are surjectively mapped to the values of the frequency-domain series. According to a special aspect of the instant disclosure, the frequencies of the frequency-domain series are bijectively mapped to the values of the frequency-domain series.

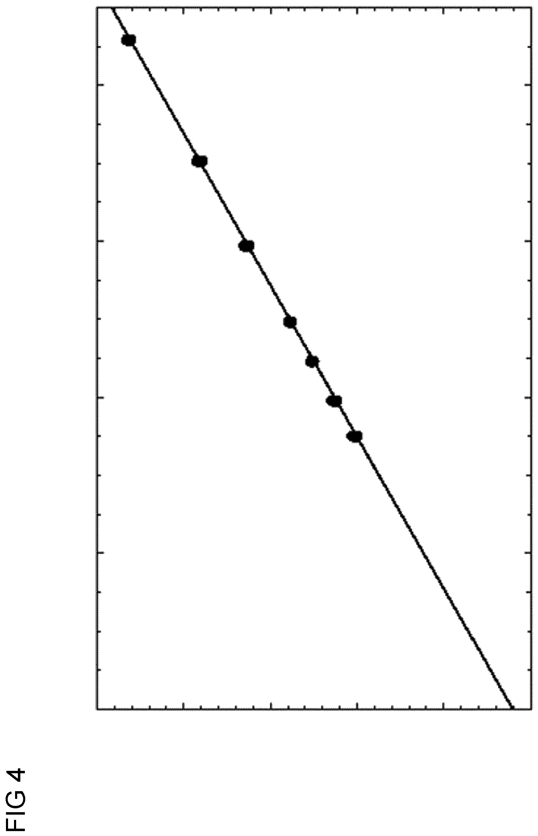

It is envisaged that the frequency-derived flow rate is a first flow rate. The instant disclosure also pertains to any of the methods described herein, wherein the method comprises the step of employing a first function $Q_1(f_{peak})$ to map the peak frequency $f_{peak}$ to a frequency-derived flow rate $Q_1$. In an embodiment, the first function $Q_1(f_{peak})$ is a monotonic function of the peak frequency $f_{peak}$. In a special embodiment, the first function $Q_1(f_{peak})$ is an increasing function of the peak frequency $f_{peak}$. According to a special aspect, an affine map $Q_1(f_{peak})$ and/or an affine function $Q_1(f_{peak})$ of the form

$$Q_1 = Q_{0,1} + k \cdot f_{peak}$$

having constants $Q_{0,1}$ and k maps the peak frequency $f_{peak}$ to a frequency-derived flow rate $Q_1$. A functional relationship between the moment value $S$ and the flow rate $Q_1$ is also illustrated in FIG 4.

The instant disclosure also teaches any of the methods described herein and involving a series of frequencies, wherein the frequency-domain series comprises an ordered series of frequencies and a series of values.

The instant disclosure also teaches any of the methods described herein and involving a frequency-derived flow rate, the method comprising the steps of:
if the peak value $S_{peak}$ exceeds the predetermined threshold:

comparing the frequency-derived flow rate to the range-derived flow rate;
if the frequency-derived flow rate and the range-derived flow rate differ by less than a second error margin:

producing a second output flow rate based on at least one of the frequency-derived flow rate and the range-derived flow rate, the second output flow rate being indicative of the flow rate of the fluid flowing through the conduit (1) of the flow meter;

producing a second output signal from the second output flow rate; and

transmitting the second output signal to an output circuit (13).

The instant disclosure also teaches any of the methods involving a second output flow rate, wherein the method comprises the step of using a predetermined communication bus protocol such as a digital communication bus protocol to transmit the second output signal to an output circuit (13). The flow meter ideally comprises the output circuit (13).

In an embodiment, the second output flow rate is indicative of the flow rate of a process fluid flowing through the conduit (1) of the flow meter. According to a special aspect of the instant disclosure, the second output flow rate is an estimate of the flow rate of a fluid such as a process fluid flowing through the conduit (1) of the flow meter.

The instant disclosure teaches any of the methods described herein and involving a frequency-derived flow rate, the method comprising the steps of:

if the peak value $S_{peak}$ exceeds the predetermined threshold:

comparing the frequency-derived flow rate to the range-derived flow rate;

if the frequency-derived flow rate and the range-derived flow rate differ by less than a second error margin:

producing a second output flow rate based on at least one of the frequency-derived flow rate and the range-derived flow rate; and using the second output flow rate to set a position of a valve member of a valve.

It is envisaged that a method described herein and involving a frequency-derived flow rate comprises the step of producing a second output flow rate exclusively as a function of the frequency-derived flow rate. The second output flow rate will then not depend on the range-derived flow rate.

It is still envisaged that a method described herein and involving a frequency-derived flow rate comprises the step of producing a second output flow rate exclusively as a function of the range-derived flow rate. The second output flow rate will then not depend on the frequency-derived flow rate.

It is further envisaged that a method described herein and involving a frequency-derived flow rate comprises the step of producing a second output flow rate by averaging the frequency-derived flow rate and the range-derived flow rate. In an embodiment, the average of the frequency-derived flow rate and the range-derived flow rate is an arithmetic average. In another embodiment, the average of the frequency-derived flow rate and the range-derived flow rate is a geometric average.

The instant disclosure further teaches any of the methods described herein and involving a second output flow rate, wherein the method comprises the step of using the second output flow rate to control a position of a valve member of a valve. In a special embodiment, the second output flow rate is used as a set point to control a position of a valve member of a valve.

The instant disclosure teaches any of the methods described herein and involving a frequency-derived flow rate, the method comprising the steps of:

if the peak value $S_{peak}$ exceeds the predetermined threshold:

comparing the frequency-derived flow rate to the range-derived flow rate;

if the frequency-derived flow rate and the range-derived flow rate differ by more than a second error margin:

producing a second error signal; and transmitting the second error signal to an output circuit (13).

The instant disclosure further teaches any of the methods described herein and involving a second error signal, wherein the method comprises the step of using a predetermined communication bus protocol such as a digital communication bus protocol to transmit the second error signal to an output circuit (13). The flow meter ideally comprises the output circuit (13). In an embodiment, the first error signal and the second error signal are the same. In another embodiment, the first error signal differs from the second error signal.

The second error margin can, by way of non-limiting example, be two percent or five percent or ten percent of the range-derived flow rate. According to an aspect of the instant disclosure, the second error margin is at least two percent or at least five percent or at least ten percent of the range-derived flow rate. The second error margin can, by way of non-limiting example, be two percent or five percent or ten percent of the frequency-derived flow rate. According to an aspect of the instant disclosure, the second error margin is at least two percent or at least five percent or at least ten percent of the frequency-derived flow rate. In an embodiment, the first error margin and the second error margin are the same. In another embodiment, first error margin is different from the second error margin.

The instant disclosure also teaches any of the methods described herein, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values being associated with a frequency of the series of frequencies;

producing a plurality of peak values $S_{peak}$ by determining for each frequency-domain series of the plurality of frequency-domain series a peak value $S_{peak}$ as the largest value of the frequency-domain series;

producing a plurality of peak frequencies $f_{peak}$ by identifying for each frequency-domain series of the plurality of frequency-domain series a peak frequency $f_{peak}$ that is associated with the peak value $S_{peak}$ of the frequency-domain series;

determining a plurality of peak-derived flow rates by mapping each peak value $S_{peak}$ of the plurality of peak values $S_{peak}$ to a peak-derived flow rate, each peak-derived flow rate of the plurality of peak-derived flow rates being indicative of the flow rate of the fluid flowing through the conduit (1) of the flow meter;

using the plurality of peak frequencies $f_{peak}$ and the plurality of peak-derived flow rates to determine parameters $Q_{0,1}$, $k$ of a first function $Q_1(f_{peak})$, the first function $Q_1(f_{peak})$ mapping peak frequencies $f_{peak}$ to frequency-derived flow rates; and

saving the parameters $Q_{0,1}$, k of the first function $Q_1(f_{peak})$ to a non-volatile memory.

The instant disclosure also teaches any of the methods described herein, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values corresponding to a frequency of the series of frequencies;

producing a plurality of peak values $S_{peak}$ by determining for each frequency-domain series of the plurality of frequency-domain series a peak value $S_{peak}$ as the largest value of the frequency-domain series;

producing a plurality of peak frequencies $f_{peak}$ by identifying for each frequency-domain series of the plurality of frequency-domain series a peak frequency $f_{peak}$ that corresponds to the peak value $S_{peak}$ of the frequency-domain series;

determining a plurality of peak-derived flow rates by mapping each peak value $S_{peak}$ of the plurality of peak values $S_{peak}$ to a peak-derived flow rate, each peak-derived flow rate of the plurality of peak-derived flow rates being indicative of the flow rate of the fluid flowing through the conduit (1) of the flow meter;

using the plurality of peak frequencies $f_{peak}$ and the plurality of peak-derived flow rates to determine parameters $Q_{0,1}$, $k$ of a first function $Q_1(f_{peak})$, the first function $Q_1(f_{peak})$ mapping peak frequencies $f_{peak}$ to frequency-derived flow rates; and

saving the parameters $Q_{0,1}$, k of the first function $Q_1(f_{peak})$ to a non-volatile memory.

It is envisaged that the plurality of peak values $S_{peak}$ is a plurality of peak amplitudes. It is envisaged that each peak value $S_{peak}$ of the plurality of peak values $S_{peak}$ is a peak amplitude of the plurality of peak amplitudes.

The instant disclosure also teaches any of the methods described herein and involving a first function $Q_1(f_{peak})$, the method comprising the step of saving the parameters $Q_{0,1}$, $k$ of the first function $Q_1(f_{peak})$ to a non-volatile memory of the flow meter. The present disclosure also teaches any of the methods described herein and involving a first function $Q_1(f_{peak})$, the method comprising the step of employing linear regression to determine parameters $Q_{0,1}$, k of a first function $Q_1(f_{peak})$ based on the plurality of peak frequencies $f_{peak}$ and based on the plurality of peak-derived flow rates, the first function $Q_1(f_{peak})$ mapping peak frequencies $f_{peak}$ to frequency-derived flow rates.

The instant disclosure also teaches any of the methods described herein and involving a first function $Q_1(f_{peak})$, the method comprising the step of using the first function $Q_1(f_{peak})$ and the parameters $Q_{0,1}$, $k$ of the first function $Q_1(f_{peak})$ to set a position of a valve member of a valve. The present disclosure further teaches any of the methods described herein and involving a first function $Q_1(f_{peak})$, the method comprising the step of using the first function $Q_1(f_{peak})$ and the parameters $Q_{0,1}$, k of the first function $Q_1(f_{peak})$ to control a position of a valve member of a valve.

In an embodiment, each peak-derived flow rate of the plurality of peak-derived flow rates is indicative of the flow rate of a process fluid flowing through the conduit (1) of the flow meter. According to a special aspect of the present disclosure, each peak-derived flow rate of the plurality of peak-derived flow rates is an estimate of the flow rate of a fluid such as a process fluid flowing through the conduit (1) of the flow meter.

The instant disclosure further teaches any of the methods described herein, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values being associated with a frequency of the series of frequencies;

producing a plurality of peak values $S_{\text{peak}}$ by determining for each frequency-domain series of the plurality of frequency-domain series a peak value $S_{\text{peak}}$ as the largest value of the frequency-domain series;

producing a plurality of peak frequencies $f_{\text{peak}}$ by identifying for each frequency-domain series of the plurality of frequency-domain series a peak frequency $f_{\text{peak}}$ that is associated with the peak value $S_{\text{peak}}$ of the frequency-domain series;

determining a plurality of frequency-derived flow rates by mapping each peak frequency $f_{\text{peak}}$ of the plurality of peak frequencies $f_{\text{peak}}$ to a frequency-derived flow rate, each frequency-derived flow rate of the plurality of frequency-derived flow rates being indicative of the flow rate of the fluid flowing through the conduit (1) of the flow meter;

using the plurality of peak values $S_{\text{peak}}$ and the plurality of frequency-derived flow rates to determine parameters of a second function $Q_2(S_{\text{peak}})$, the second function $Q_2(S_{\text{peak}})$ mapping peak values $S_{\text{peak}}$ to peak-derived flow rates; and

saving the parameters of the second function $Q_2(S_{\text{peak}})$ to a non-volatile memory.

The instant disclosure also teaches any of the methods described herein, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values corresponding to a frequency of the series of frequencies;

producing a plurality of peak values $S_{\text{peak}}$ by determining for each frequency-domain series of the plurality of frequency-domain series a peak value $S_{\text{peak}}$ as the largest value of the frequency-domain series;

producing a plurality of peak frequencies $f_{\text{peak}}$ by identifying for each frequency-domain series of the plurality of frequency-domain series a peak frequency $f_{\text{peak}}$ that corresponds to the peak value $S_{\text{peak}}$ of the frequency-domain series;

determining a plurality of frequency-derived flow rates by mapping each peak frequency $f_{\text{peak}}$ of the plurality of peak frequencies $f_{\text{peak}}$ to a frequency-derived flow rate, each frequency-derived flow rate of the plurality of frequency-derived flow rates being indicative of the flow rate of the fluid flowing through the conduit (1) of the flow meter;

using the plurality of peak values $S_{\text{peak}}$ and the plurality of frequency-derived flow rates to determine parameters of a second function $Q_2(S_{\text{peak}})$, the second function $Q_2(S_{\text{peak}})$ mapping peak values $S_{\text{peak}}$ to peak-derived flow rates; and

saving the parameters of the second function $Q_2(S_{\text{peak}})$ to a non-volatile memory.

The instant disclosure also teaches any of the methods described herein and involving a second function $Q_2(S_{\text{peak}})$, the method comprising the step of saving the parameters of the second function $Q_2(S_{\text{peak}})$ to a non-volatile memory of the flow meter. The instant disclosure also teaches any of the methods described herein and involving a second function $Q_2(S_{\text{peak}})$, the method comprising the step of using the second function $Q_2(S_{\text{peak}})$ and the parameters of the second function $Q_2(S_{\text{peak}})$ to set a position of a valve member of a valve. The present disclosure further teaches any of the methods described herein and involving a second function $Q_2(S_{\text{peak}})$, the method comprising the step of using the second function $Q_2(S_{\text{peak}})$ and the parameters of the second function $Q_2(S_{\text{peak}})$ to control a position of a valve member of a valve.

The instant disclosure further teaches any of the methods described herein, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values being associated with a frequency of the series of frequencies;

producing a plurality of third range series by determining for each frequency-domain series of the plurality of frequency-domain series a third range series as a subset of the frequency-domain series;

determining a plurality of moment values $S$ by determining for each third range series of the plurality of third range series a moment value $S$ of the third range series;

determining a plurality of frequency-derived flow rates by mapping each peak frequency $f_{peak}$ of the plurality of peak frequencies $f_{peak}$ to a frequency-derived flow rate, each frequency-derived flow rate of the plurality of frequency-derived flow rates being indicative of the flow rate of the fluid flowing through the conduit (1) of the flow meter;

using the plurality of moment values $S$ and the plurality of frequency-derived flow rates to determine parameters $k_1$, $k_2$, $Q_{0,3}$ of a third function $Q_3(S)$, the third function $Q_3(S)$ mapping moment values S to range-derived flow rates; and

saving the parameters $k_1$, $k_2$, $Q_{0,3}$ of the third function $Q_3(S)$ to a non-volatile memory.

The instant disclosure yet further teaches any of the methods described herein, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values corresponding to a frequency of the series of frequencies;

producing a plurality of third range series by determining for each frequency-domain series of the plurality of frequency-domain series a third range series as a subset of the frequency-domain series;

determining a plurality of moment values $S$ by determining for each third range series of the plurality of third range series a moment value $S$ of the third range series;

determining a plurality of frequency-derived flow rates by mapping each peak frequency $f_{peak}$ of the plurality of peak frequencies $f_{peak}$ to a frequency-derived flow rate, each frequency-derived flow rate of the plurality of frequency-derived flow rates being indicative of the flow rate of the fluid flowing through the conduit (1) of the flow meter;

using the plurality of moment values $S$ and the plurality of frequency-derived flow rates to determine parameters $k_1$, $k_2$, $Q_{0,3}$ of a third function $Q_3(S)$, the third function $Q_3(S)$ mapping moment values $S$ to range-derived flow rates; and

saving the parameters $k_1$, $k_2$, $Q_{0,3}$ of the third function $Q_3(S)$ to a non-volatile memory.

In an embodiment, the third range series is a third slot series or a third window series.

The instant disclosure also teaches any of the methods described herein and involving a plurality of frequency-domain series, wherein each frequency-domain series of the plurality of frequency-domain series comprises an ordered series of frequencies and a series of values, each value of the series of values corresponding to a frequency of the ordered series of frequencies. The instant disclosure still teaches any of the methods described herein and involving a plurality of frequency-domain series, wherein each frequency-domain series of the plurality of frequency-domain series comprises an ordered series of frequencies and a series of values, each value of the series of values being associated with a frequency of the ordered series of frequencies.

In an embodiment, each frequency-derived flow rate of the plurality of frequency-derived flow rates is indicative of the flow rate of a process fluid flowing through the conduit (1) of the flow meter. According to a special aspect of the present disclosure, each frequency-derived flow rate of the plurality of frequency-derived flow rates is an estimate of the flow rate of a fluid such as a process fluid flowing through the conduit (1) of the flow meter.

The present disclosure also teaches a tangible machine-readable medium having a set of instructions stored thereon that when executed by one or more processors of a vortex flow meter cause the one or more processors to perform any of the methods described herein.

The instant disclosure still teaches a tangible machine-readable medium having a set of instructions stored thereon that when executed by one or more processors of a vortex flow meter, the one or more processors having an interface configured to connect to a sensor (4) being situated inside and/or extending into a conduit (1) of the vortex flow meter, cause the one or more processors to perform any of the methods described herein.

The instant disclosure still further teaches a tangible machine-readable medium having a set of instructions stored thereon that when executed by one or more processors of a vortex flow meter, the one or more processors having a first interface configured to connect to a sensor (4) being situated inside and/or extending into a conduit (1) of the vortex flow meter and a second interface configured to connect to an output circuit (13), cause the one or more processors to perform any of the methods described herein.

The present disclosure also teaches a tangible machine-readable medium having a set of instructions stored thereon that when executed by one or more processors of a vortex flow meter cause the vortex flow meter to perform any of the methods described herein.

The instant disclosure still teaches a tangible machine-readable medium having a set of instructions stored thereon that when executed by one or more processors of a vortex flow meter, the one or more processors having an interface configured to connect to a sensor (4) being situated inside and/or extending into a conduit (1) of the vortex flow meter, cause the vortex flow meter to perform any of the methods described herein.

The instant disclosure still further teaches a tangible machine-readable medium having a set of instructions stored thereon that when executed by one or more processors of a vortex flow meter, the one or more processors having an interface configured to connect to a sensor (4) being situated inside and/or extending into a conduit (1) of the vortex flow meter and a second interface configured to connect to an output circuit (13), cause the vortex flow meter to perform any of the methods described herein.

It is envisaged that the tangible machine-readable medium is non-transitory. It is still envisaged that the tangible machine-readable medium comprises a non-volatile memory.

Any steps of a method according to the present disclosure may be embodied in hardware, in a software module executed by a processor, in a software module executed by a processor inside a container using operating-system-level virtualization, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

Reference numerals

1 conduit
2 flow
3 bluff body
4 sensor
5 raw output signal
6 measurement circuit
7 preprocessed signal
8 analysis circuit
9 flow rate
10 kinematic viscosity
11 temperature sensor
12a, 12b temperature signals
13 output circuit
14 neural network
15 - 17 input neurons
18 hidden layer
29 - 22 neurons
23 hidden layer
24 - 27 neurons
28 output neuron

**Claims**

1. A method of estimating a flow rate, the method comprising the steps of:

recording a time-domain series of signals from a sensor (4), the sensor (4) being situated inside and/or extending into a conduit (1) of a vortex flow meter;
producing a time-domain series of values from the time-domain series of signals;
producing a frequency-domain series of values from the time-domain series of values;
determining a peak value $S_{peak}$ of the frequency-domain series, the peak value $S_{peak}$ being the largest value of the frequency-domain series;
producing a first range series of values as a subset of the frequency-domain series of values;
determining a moment value $S$ of the first range series; and
mapping the moment value $S$ of the first range series to a range-derived flow rate, the range-derived flow rate being indicative of the flow rate of a fluid flowing through the conduit (1) of the flow meter;

**characterized by**

comparing the peak value $S_{peak}$ to a predetermined threshold; and

mapping the peak value $S_{peak}$ to a peak-derived flow rate, if the peak value $S_{peak}$ exceeds the predetermined threshold;

wherein the peak-derived flow rate is indicative of the flow rate of the fluid flowing through the conduit (1) of the flow meter; the method further comprising the steps of:

if the peak value $S_{peak}$ exceeds the predetermined threshold:

> comparing the peak-derived flow rate to the range-derived flow rate;
> if the peak-derived flow rate and the range-derived flow rate differ by less than a first error margin:
>
> > producing a first output flow rate based on at least one of the peak-derived flow rate and the range-derived flow rate;
> > producing a first output signal from the first output flow rate, the first output flow rate being indicative of the flow rate of the fluid flowing through the conduit (1) of the flow meter; and
> > transmitting the first output signal to an output circuit (13).

2. The method according to claim 1, the method comprising the steps of:
   if the peak value $S_{peak}$ exceeds the predetermined threshold:

   > comparing the peak-derived flow rate to the range-derived flow rate;
   > if the peak-derived flow rate and the range-derived flow rate differ by less than a first error margin:
   >
   > > producing a first output flow rate based on at least one of the peak-derived flow rate and the range-derived flow rate; and
   > > using the first output flow rate to set a position of a valve member of a valve.

3. The method according to any of the claims 1 or 2, the method comprising the steps of:
   if the peak value $S_{peak}$ exceeds the predetermined threshold:

   > comparing the peak-derived flow rate to the range-derived flow rate;
   > if the peak-derived flow rate and the range-derived flow rate differ by more than a first error margin:

> producing a first error signal; and
> transmitting the first error signal to an output circuit (13).

4. The method according to any of the claims 1 to 3, wherein the method comprises the steps of:

   > comparing the peak value $S_{peak}$ to a predetermined threshold;
   > if the peak value $S_{peak}$ exceeds the predetermined threshold:
   >
   > > mapping the peak value $S_{peak}$ to a kinematic viscosity value v, the kinematic viscosity value v being indicative of a kinematic viscosity of the fluid flowing through the conduit (1) of the flow meter;
   > > producing a kinematic viscosity signal from the kinematic viscosity value v; and
   > > transmitting the kinematic viscosity signal to an output circuit (13).

5. The method according to any of the claims 1 to 4, wherein the method comprises the steps of:

   > comparing the peak value $S_{peak}$ to a predetermined threshold;
   > if the peak value $S_{peak}$ exceeds the predetermined threshold:
   >
   > > producing a kinematic viscosity value v based on the peak value $S_{peak}$ and based on the moment value S of the first range series, the kinematic viscosity value v being indicative of a kinematic viscosity of the fluid flowing through the conduit (1) of the flow meter;
   > > producing a kinematic viscosity signal from the kinematic viscosity value v; and
   > > transmitting the kinematic viscosity signal to an output circuit (13).

6. The method according to any of the claims 1 to 4, wherein the method comprises the steps of:

   > comparing the peak value $S_{peak}$ to a predetermined threshold;
   > if the peak value $S_{peak}$ exceeds the predetermined threshold:
   >
   > > producing a second range series of values as a subset of the frequency-domain series of values;
   > > wherein the second range series differs from the first range series;

determining a moment value $M$ of the second range series;

producing a kinematic viscosity value v based on the peak value $S_{peak}$ and based on the moment value $M$ of the second range series, the kinematic viscosity value v being indicative of a kinematic viscosity of the fluid flowing through the conduit (1) of the flow meter;

producing a kinematic viscosity signal from the kinematic viscosity value v; and transmitting the kinematic viscosity signal to an output circuit (13).

7. The method according to any of the claims 1 to 6,

wherein the frequency-domain series comprises a series of frequencies and a series of values; wherein each value of the frequency-domain series is associated with a frequency of the frequency-domain series;

the method comprising the steps of:

comparing the peak value $S_{peak}$ to a predetermined threshold;
if the peak value $S_{peak}$ exceeds the predetermined threshold:

identifying a peak frequency $f_{peak}$ as a frequency of the frequency-domain series that is associated with the peak value $S_{peak}$; and
mapping the peak frequency $f_{peak}$ to a frequency-derived flow rate, the frequency-derived flow rate being indicative of the flow rate of the fluid flowing through the conduit (1) of the flow meter.

8. The method according to claim 7, the method comprising the steps of:
if the peak value $S_{peak}$ exceeds the predetermined threshold:

comparing the frequency-derived flow rate to the range-derived flow rate;
if the frequency-derived flow rate and the range-derived flow rate differ by less than a second error margin:

producing a second output flow rate based on at least one of the frequency-derived flow rate and the range-derived flow rate, the second output flow rate being indicative of the flow rate of the fluid flowing through the conduit (1) of the flow meter;
producing a second output signal from the second output flow rate; and

transmitting the second output signal to an output circuit (13).

9. The method according to any of the claims 7 to 8, the method comprising the steps of:
if the peak value $S_{peak}$ exceeds the predetermined threshold:

comparing the frequency-derived flow rate to the range-derived flow rate;
if the frequency-derived flow rate and the range-derived flow rate differ by less than a second error margin:

producing a second output flow rate based on at least one of the frequency-derived flow rate and the range-derived flow rate; and
using the second output flow rate to set a position of a valve member of a valve.

10. The method according to any of the claims 7 to 9, the method comprising the steps of:
if the peak value $S_{peak}$ exceeds the predetermined threshold:

comparing the frequency-derived flow rate to the range-derived flow rate;
if the frequency-derived flow rate and the range-derived flow rate differ by more than a second error margin:

producing a second error signal; and
transmitting the second error signal to an output circuit (13).

11. The method according to any of the claims 1 to 10, the method comprising the steps of:

recording a plurality of time-domain series of signals from a sensor (4), the sensor (4) being situated inside and/or extending into a conduit (1) of a vortex flow meter;
producing a plurality of time-domain series of values by producing a time-domain series of values from each time-domain series of signals of the plurality of time-domain series of signals;
producing a plurality of frequency-domain series by producing a frequency-domain series from each time-domain series of values of the plurality of time-domain series of values;
wherein each frequency-domain series of the plurality of frequency-domain series comprises a series of frequencies and a series of values, each value of the series of values being associated with a frequency of the series of frequencies;
producing a plurality of peak values $S_{peak}$ by determining for each frequency-domain series of the plurality of frequency-domain series a peak value $S_{peak}$ as the largest value of the frequency-domain series;

producing a plurality of peak frequencies $f_{peak}$ by identifying for each frequency-domain series of the plurality of frequency-domain series a peak frequency $f_{peak}$ that is associated with the peak value $S_{peak}$ of the frequency-domain series;

determining a plurality of frequency-derived flow rates by mapping each peak frequency $f_{peak}$ of the plurality of peak frequencies $f_{peak}$ to a frequency-derived flow rate, each frequency-derived flow rate of the plurality of frequency-derived flow rates being indicative of the flow rate of the fluid flowing through the conduit (1) of the flow meter;

using the plurality of peak values $S_{peak}$ and the plurality of frequency-derived flow rates to determine parameters of a second function $Q_2(S_{peak})$, the second function $Q_2(S_{peak})$ mapping peak values $S_{peak}$ to peak-derived flow rates; and

saving the parameters of the second function $Q_2(S_{peak})$ to a non-volatile memory.

12. The method according to any of the claims 1 to 11, the method comprising the steps of:

recording a plurality of time-domain series of signals from a sensor (4), the sensor (4) being situated inside and/or extending into a conduit (1) of a vortex flow meter;

producing a plurality of time-domain series of values by producing a time-domain series of values from each time-domain series of signals of the plurality of time-domain series of signals;

producing a plurality of frequency-domain series by producing a frequency-domain series from each time-domain series of values of the plurality of time-domain series of values;

wherein each frequency-domain series of the plurality of frequency-domain series comprises a series of frequencies and a series of values, each value of the series of values being associated with a frequency of the series of frequencies;

producing a plurality of third range series by determining for each frequency-domain series of the plurality of frequency-domain series a third range series as a subset of the frequency-domain series;

determining a plurality of moment values $S$ by determining for each third range series of the plurality of third range series a moment value $S$ of the third range series;

determining a plurality of frequency-derived flow rates by mapping each peak frequency $f_{peak}$ of

the plurality of peak frequencies $f_{peak}$ to a frequency-derived flow rate, each frequency-derived flow rate of the plurality of frequency-derived flow rates being indicative of the flow rate of the fluid flowing through the conduit (1) of the flow meter;

using the plurality of moment values $S$ and the plurality of frequency-derived flow rates to determine parameters $k_1$, $k_2$, $Q_{0,3}$ of a third function $Q_3(S)$, the third function $Q_3(S)$ mapping moment values S to range-derived flow rates; and

saving the parameters $k_1$, $k_2$, $Q_{0,3}$ of the third function $Q_3(S)$ to a non-volatile memory.

13. A tangible machine-readable medium having a set of instructions stored thereon that when executed by one or more processors of a vortex flow meter cause the one or more processors to perform the method according to any of the claims 1 to 12.


## Patentansprüche

1. Verfahren zur Schätzung einer Durchflussmenge, wobei das Verfahren die folgenden Schritte umfasst:

Aufzeichnung einer Zeitbereichsreihe von Signalen von einem Sensor (4), wobei sich der Sensor (4) innerhalb einer Leitung (1) eines Wirbeldurchflussmessers befindet und/oder in diese hineinragt;

Erzeugung einer Zeitbereichsreihe von Werten aus der Zeitbereichsreihe von Signalen;

Erzeugung einer Frequenzbereichsreihe von Werten aus der Zeitbereichsreihe von Werten;

Bestimmung eines Spitzenwertes $S_{peak}$ der Frequenzbereichsreihe, wobei der Spitzenwert $S_{peak}$ der größte Wert der Frequenzbereichsreihe ist;

Erzeugung einer ersten Bereichsreihe von Werten als Teilmenge der Frequenzbereichsreihe von Werten:

Bestimmung eines Momentwerts S der ersten Bereichsreihe; und

Abbilden des Momentwerts S der ersten Bereichsreihe auf eine bereichsabgeleitete Durchflussrate, wobei die bereichsabgeleitete Durchflussrate die Durchflussrate eines durch die Leitung (1) des Durchflussmessers fließenden Fluids angibt;

**gekennzeichnet durch**

Vergleich des Spitzenwertes $S_{peak}$ mit einem vorgegebenen Schwellenwert; und

Abbilden des Spitzenwerts $S_{peak}$ auf eine spitzenwertabgeleitete Durchflussrate, wenn der Spitzenwert $S_{peak}$ den vorgegebenen Schwellenwert überschreitet;

wobei die spitzenwertabgeleitete Durchflussrate die Durchflussrate des durch die Leitung (1) des Durchflussmessers fließenden Fluids angibt; wobei das Verfahren ferner die folgenden Schritte umfasst:

wenn der Spitzenwert $S_{peak}$ den vorgegebenen Schwellenwert überschreitet:

Vergleich der spitzenwertabgeleiteten Durchflussmenge mit der bereichsabgeleiteten Durchflussmenge; wenn die spitzenwertabgeleitete Durchflussmenge und die bereichsabgeleitete Durchflussmenge um weniger als eine erste Fehlerspanne voneinander abweichen:

Erzeugen einer ersten Ausgangsdurchflussrate auf der Grundlage von zumindest einer aus spitzenwertabgeleiteten Durchflussrate und bereichsabgeleiteten Durchflussrate; Erzeugen eines ersten Ausgangssignals aus der ersten Ausgangsdurchflussrate, wobei die erste Ausgangsdurchflussrate die Durchflussrate des durch die Leitung (1) des Durchflussmessers fließenden Fluids angibt; und Übermittlung des ersten Ausgangssignals an eine Ausgangsschaltung (13).

2. Verfahren nach Anspruch 1, wobei das Verfahren die folgenden Schritte umfasst:
wenn der Spitzenwert $S_{peak}$ den vorgegebenen Schwellenwert überschreitet:

Vergleich der von der Spitze abgeleiteten Durchflussrate mit der vom Bereich abgeleiteten Durchflussrate; wenn die spitzenwertabgeleitete Durchflussrate und die bereichsabgeleitete Durchflussrate um weniger als eine erste Fehlerspanne voneinander abweichen:

Erzeugen einer ersten Ausgangsdurchflussrate auf der Grundlage der spitzenwertabgeleiteten Durchflussrate und/oder der bereichsabgeleiteten Durchflussrate; und Verwendung der ersten Ausgangsdurchflussrate zur Einstellung einer Position eines Ventilelements eines Ventils.

3. Verfahren nach einem der Ansprüche 1 oder 2, wobei das Verfahren die folgenden Schritte umfasst:
wenn der Spitzenwert $S_{peak}$ den vorgegebenen Schwellenwert überschreitet:

Vergleich der spitzenwertabgeleiteten Durchflussrate mit der bereichsabgeleiteten Durchflussrate; wenn die spitzenwertabgeleitete Durchflussrate und die bereichsabgeleitete Durchflussrate um mehr als eine erste Fehlerspanne voneinander abweichen:

Erzeugen eines ersten Fehlersignals; und Übermittlung des ersten Fehlersignals an eine Ausgangsschaltung (13).

4. Verfahren nach einem der Ansprüche 1 bis 3, wobei das Verfahren die folgenden Schritte umfasst:

Vergleich des Spitzenwertes $S_{peak}$ mit einem vorgegebenen Schwellenwert; wenn der Spitzenwert $S_{peak}$ den vorgegebenen Schwellenwert überschreitet:

Zuordnen des Spitzenwertes $S_{peak}$ zu einem kinematischen Viskositätswert v, wobei der kinematische Viskositätswert v eine kinematische Viskosität des durch die Leitung (1) des Durchflussmessers fließenden Fluids angibt; Erzeugen eines kinematischen Viskositätssignals aus dem kinematischen Viskositätswert v; und Übertragung des kinematischen Viskositätssignals an eine Ausgangsschaltung (13).

5. Verfahren nach einem der Ansprüche 1 bis 4, wobei das Verfahren die folgenden Schritte umfasst:

Vergleich des Spitzenwertes $S_{peak}$ mit einem vorgegebenen Schwellenwert; wenn der Spitzenwert $S_{peak}$ den vorgegebenen Schwellenwert überschreitet:

Erzeugen eines kinematischen Viskositätswerts v auf der Grundlage des Spitzenwerts $S_{peak}$ und auf der Grundlage des Momentwerts S der ersten Bereichsreihe, wobei der kinematische Viskositätswert v eine kinematische Viskosität des durch die Leitung (1) des Durchflussmessers fließenden Fluids angibt; Erzeugen eines kinematischen Viskositätssignals aus dem kinematischen Viskositätswert v; und Übertragung des kinematischen Viskositätssignals an eine Ausgangsschaltung (13).

6. Verfahren nach einem der Ansprüche 1 bis 4, wobei das Verfahren die folgenden Schritte umfasst:

Vergleich des Spitzenwertes $S_{\text{peak}}$ mit einem vorgegebenen Schwellenwert;
wenn der Spitzenwert $S_{\text{peak}}$ den vorgegebenen Schwellenwert überschreitet:

Erzeugen einer zweiten Bereichsreihe von Werten als Teilmenge der Frequenzbereichsreihe von Werten;
wobei sich die zweite Bereichsreihe von der ersten Bereichsreihe unterscheidet;
Bestimmung eines Momentwerts $M$ der zweiten Bereichsreihe;
Erzeugen eines kinematischen Viskositätswerts v auf der Grundlage des Spitzenwerts $S_{\text{peak}}$ und auf der Grundlage des Momentwerts $M$ der zweiten Bereichsreihe, wobei der kinematische Viskositätswert v eine kinematische Viskosität des durch die Leitung (1) des Durchflussmessers fließenden Fluids angibt;
Erzeugen eines kinematischen Viskositätssignals aus dem kinematischen Viskositätswert v; und
Übertragung des kinematischen Viskositätsignals an eine Ausgangsschaltung (13).

7. Verfahren nach einem der Ansprüche 1 bis 6,

wobei die Frequenzbereichsreihe eine Reihe von Frequenzen und eine Reihe von Werten umfasst;
wobei jeder Wert der Frequenzbereichsreihe mit einer Frequenz der Frequenzbereichsreihe verbunden ist;
das Verfahren umfassend die folgenden Schritte:

Vergleich des Spitzenwertes $S_{\text{peak}}$ mit einem vorgegebenen Schwellenwert;
wenn der Spitzenwert $S_{\text{peak}}$ den vorgegebenen Schwellenwert überschreitet:

Identifizierung einer Spitzenfrequenz $f_{\text{peak}}$ als eine Frequenz der Frequenzbereichsreihe, die mit dem Spitzenwert $S_{\text{peak}}$ verbunden ist; und
Abbilden der Spitzenfrequenz $f_{\text{peak}}$ auf eine frequenzabgeleitete Durchflussrate, wobei die frequenzabgeleitete Durchflussrate die Durchflussrate des durch die Leitung (1) des Durchflussmessers fließenden Fluids angibt.

8. Verfahren nach Anspruch 7, wobei das Verfahren die folgenden Schritte umfasst:
wenn der Spitzenwert $S_{\text{peak}}$ den vorgegebenen

Schwellenwert überschreitet:

Vergleich der frequenzabgeleiteten Durchflussrate mit der bereichsabgeleiteten Durchflussrate;
wenn die frequenzabgeleitete Durchflussrate und die bereichsabgeleitete Durchflussrate um weniger als eine zweite Fehlerspanne voneinander abweichen:

Erzeugen einer zweiten Ausgangsdurchflussrate auf der Grundlage der frequenzabgeleiteten Durchflussrate und/oder der bereichsabgeleiteten Durchflussrate, wobei die zweite Ausgangsdurchflussrate die Durchflussrate des durch die Leitung (1) des Durchflussmessers fließenden Fluids angibt;
Erzeugen eines zweiten Ausgangssignals aus der zweiten Ausgangsdurchflussrate; und
Übermittlung des zweiten Ausgangssignals an eine Ausgangsschaltung (13).

9. Verfahren nach einem der Ansprüche 7 bis 8, wobei das Verfahren die folgenden Schritte umfasst:
wenn der Spitzenwert $S_{\text{peak}}$ den vorgegebenen Schwellenwert überschreitet:

Vergleich der frequenzabgeleiteten Durchflussrate mit der bereichsabgeleiteten Durchflussrate;
wenn die frequenzabgeleitete Durchflussrate und die bereichsabgeleitete Durchflussrate um weniger als eine zweite Fehlerspanne voneinander abweichen:

Erzeugen einer zweiten Ausgangsdurchflussrate auf der Grundlage der frequenzabgeleiteten Durchflussrate und/oder der bereichsabgeleiteten Durchflussrate; und
Verwendung der zweiten Ausgangsdurchflussrate zur Einstellung einer Position eines Ventilelements eines Ventils.

10. Verfahren nach einem der Ansprüche 7 bis 9, wobei das Verfahren die folgenden Schritte umfasst:
wenn der Spitzenwert $S_{\text{peak}}$ den vorgegebenen Schwellenwert überschreitet:

Vergleich der frequenzabgeleiteten Durchflussrate mit der bereichsabgeleiteten Durchflussrate;
wenn die frequenzabgeleitete Durchflussrate und die bereichsabgeleitete Durchflussrate um mehr als eine zweite Fehlerspanne voneinander abweichen:

Erzeugen eines zweiten Fehlersignals; und Übermittlung des zweiten Fehlersignals an eine Ausgangsschaltung (13).

**11.** Verfahren nach einem der Ansprüche 1 bis 10, wobei das Verfahren die folgenden Schritte umfasst:

Aufzeichnung einer Vielzahl von Zeitbereichsreihen von Signalen von einem Sensor (4), wobei sich der Sensor (4) innerhalb einer Leitung (1) eines Wirbeldurchflussmessers befindet und/oder in diese hineinragt;

Erzeugen einer Vielzahl von Zeitbereichsreihen von Werten durch Erzeugen einer Zeitbereichsreihe von Werten aus jeder Zeitbereichsreihe von Signalen der Vielzahl von Zeitbereichsreihen von Signalen;

Erzeugen einer Vielzahl von Frequenzbereichsreihen durch Erzeugen einer Frequenzbereichsreihe aus jeder Zeitbereichsserie von Werten der Vielzahl von Zeitbereichsserien von Werten;

wobei jede Frequenzbereichsreihe der Vielzahl von Frequenzbereichsreihen eine Reihe von Frequenzen und eine Reihe von Werten umfasst, wobei jeder Wert der Reihe von Werten mit einer Frequenz der Reihe von Frequenzen verbunden ist;

Erzeugen einer Vielzahl von Spitzenwerten $S_{peak}$ durch Bestimmen eines Spitzenwertes $S_{peak}$ für jede Frequenzbereichsreihe der Vielzahl von Frequenzbereichsreihen als den größten Wert der Frequenzbereichsreihe;

Erzeugen einer Vielzahl von Spitzenfrequenzen $f_{peak}$, indem für jede Frequenzbereichsreihe der Vielzahl von Frequenzbereichsreihen eine Spitzenfrequenz $f_{peak}$ identifiziert wird, die mit dem Spitzenwert $S_{peak}$ der Frequenzbereichsreihe verbunden ist;

Bestimmen einer Vielzahl von frequenzabgeleiteten Durchflussraten durch Abbilden jeder Spitzenfrequenz $f_{peak}$ der Vielzahl von Spitzenfrequenzen $f_{peak}$ auf eine frequenzabgeleitete Durchflussrate, wobei jede frequenzabgeleitete Durchflussrate der Vielzahl von frequenzabgeleiteten Durchflussraten die Durchflussrate des durch die Leitung (1) des Durchflussmessers strömenden Fluids angibt;

Verwenden der Vielzahl von Spitzenwerten $S_{peak}$ und der Vielzahl von frequenzabgeleiteten Flussraten, um Parameter einer zweiten Funktion $Q_2 (S_{peak})$ zu bestimmen, wobei die zweite Funktion $Q_2 (S_{peak})$ Spitzenwerte $S_{peak}$ auf spitzenwertabgeleitete Flussraten abbildet; und

Speicherung der Parameter der zweiten Funktion $Q_2 (S_{peak})$ in einem nichtflüchtigen Speicher

**12.** Verfahren nach einem der Ansprüche 1 bis 11, wobei das Verfahren die folgenden Schritte umfasst:

Aufzeichnung einer Vielzahl von Zeitbereichsreihen von Signalen von einem Sensor (4), wobei sich der Sensor (4) innerhalb einer Leitung (1) eines Wirbeldurchflussmessers befindet und/oder in diese hineinragt;

Erzeugen einer Vielzahl von Zeitbereichsreihen von Werten durch Erzeugen einer Zeitbereichsreihe von Werten aus jeder Zeitbereichsreihe von Signalen der Vielzahl von Zeitbereichsreihen von Signalen;

Erzeugen einer Vielzahl von Frequenzbereichsreihen durch Erzeugen einer Frequenzbereichsreihe aus jeder Zeitbereichsreihe von Werten der Vielzahl von Zeitbereichsreihen von Werten;

wobei jede Frequenzbereichsreihe der Vielzahl von Frequenzbereichsreihen eine Reihe von Frequenzen und eine Reihe von Werten umfasst, wobei jeder Wert der Reihe von Werten mit einer Frequenz der Reihe von Frequenzen verbunden ist;

Erzeugen einer Vielzahl von dritten Bereichsserien durch Bestimmen einer dritten Bereichsserie für jede Frequenzbereichsserie der Vielzahl von Frequenzbereichsserien als Untermenge der Frequenzbereichsserie;

Bestimmen einer Vielzahl von Momentwerten S durch Bestimmen eines Momentwertes S der dritten Bereichsreihe für jede dritte Bereichsreihe der Vielzahl von dritten Bereichsreihen;

Bestimmen einer Vielzahl von frequenzabgeleiteten Durchflussraten durch Abbilden jeder Spitzenfrequenz $f_{peak}$ der Vielzahl von Spitzenfrequenzen $f_{peak}$ auf eine frequenzabgeleitete Durchflussrate, wobei jede frequenzabgeleitete Durchflussrate der Vielzahl von frequenzabgeleiteten Durchflussraten die Durchflussrate des durch die Leitung (1) des Durchflussmessers strömenden Fluids angibt;

Verwenden der Vielzahl von Momentwerten S und der Vielzahl von frequenzabgeleiteten Durchflussraten, um die Parameter $k_1$, $k_2$, $Q_{0,3}$ einer dritten Funktion $Q_3 (S)$ zu bestimmen, wobei die dritte Funktion $Q_3 (S)$ Momentwerte S auf bereichsabgeleitete Flussraten abbildet; und

Speicherung der Parameter $k_1$, $k_2$, $Q_{0,3}$ der dritten Funktion $Q_3 (S)$ in einem nichtflüchtigen Speicher.

**13.** Ein greifbares maschinenlesbares Medium, auf dem ein Satz von Anweisungen gespeichert ist, die, wenn sie von einem oder mehreren Prozessoren eines Wirbeldurchflussmessers ausgeführt werden, den einen oder die mehreren Prozessoren veranlassen, das Verfahren nach einem der Ansprüche 1 bis 12 durchzuführen.

## Revendications

1. Méthode d'estimation d'un débit, comprenant les étapes suivantes :

   l'enregistrement d'une série de signaux dans le domaine temporel à partir d'un capteur (4), le capteur (4) étant situé à l'intérieur et/ou s'étendant dans un conduit (1) d'un débitmètre à tourbillon ;
   produire une série de valeurs dans le domaine temporel à partir de la série de signaux dans le domaine temporel ;
   produire une série de valeurs dans le domaine de fréquence à partir de la série de valeurs dans le domaine temporel ;
   déterminer une valeur de crête $S_{peak}$ de la série de domaine de fréquence, la valeur de crête $S_{peak}$ étant la plus grande valeur de la série de domaine de fréquence ;
   produire une première série de gamme de valeurs en tant que sous-ensemble de la série de valeurs dans le domaine de la fréquence ;
   déterminer une valeur de moment $S$ de la première série de gamme; et
   mettre en correspondance la valeur de moment $S$ de la première série de gamme avec un débit dérivé de la gamme, le débit dérivé de la gamme étant indicatif du débit d'un fluide s'écoulant dans le conduit (1) du débitmètre;
   **caractérisé par**
   comparer la valeur de crête $S_{peak}$ à un seuil prédéterminé ; et
   l'établissement d'une correspondance entre la valeur de crête $S_{peak}$ et un débit dérivé de crête, si la valeur de crête $S_{peak}$ dépasse le seuil prédéterminé ;
   dans lequel le débit dérivé de crête est indicatif du débit du fluide s'écoulant dans le conduit (1) du débitmètre ; la méthode comprend en outre les étapes suivantes :
   si la valeur de crête $S_{peak}$ dépasse le seuil prédéterminé :

      comparer le débit dérivé de la crête au débit dérivé de la gamme;
      si le débit dérivé de la crête et le débit dérivé de la gamme diffèrent de moins d'une première marge d'erreur :

         produire un premier débit de sortie basé sur au moins l'un des débits dérivé de la crête et dérivé de la gamme;
         produire un premier signal de sortie à partir du premier débit de sortie, le premier débit de sortie étant indicatif du débit du fluide s'écoulant dans le conduit (1) du débitmètre ; et
         transmettre le premier signal de sortie à un circuit de sortie (13).

2. Méthode selon la revendication 1, la méthode comprenant les étapes suivantes :
   si la valeur de crête $S_{peak}$ dépasse le seuil prédéterminé :

      comparer le débit dérivé de la crête au débit dérivé de la gamme;
      si le débit dérivé de la crête et le débit dérivé de la gamme diffèrent de moins d'une première marge d'erreur :

         produire un premier débit de sortie sur la base d'au moins l'un des débits dérivé de la crête et dérivé de la gamme; et
         utiliser le premier débit de sortie pour régler la position d'un élément d'une vanne.

3. La méthode selon l'une des revendications 1 ou 2, la méthode comprenant les étapes suivantes :
   si la valeur de crête $S_{peak}$ dépasse le seuil prédéterminé :

      comparer le débit dérivé de la crête au débit dérivé de la gamme;
      si le débit dérivé de la crête et le débit dérivé de la gamme diffèrent de plus d'une première marge d'erreur :

         produire un premier signal d'erreur ; et
         transmettre le premier signal d'erreur à un circuit de sortie (13).

4. La méthode selon l'une des revendications 1 à 3, dans laquelle la méthode comprend les étapes suivantes :

      comparer la valeur de crête $S_{peak}$ à un seuil prédéterminé ;
      si la valeur de crête $S_{peak}$ dépasse le seuil prédéterminé :

         mettre en correspondance la valeur de crête $S_{peak}$ avec une valeur de viscosité cinématique v, la valeur de viscosité cinématique v étant indicative d'une viscosité cinématique du fluide s'écoulant dans le conduit (1) du débitmètre ;
         produire un signal de viscosité cinématique à partir de la valeur de viscosité cinématique v ; et
         transmettre le signal de viscosité cinématique à un circuit de sortie (13).

5. La méthode selon l'une des revendications 1 à 4, dans laquelle la méthode comprend les étapes suivantes :

comparer la valeur de crête $S_{peak}$ à un seuil prédéterminé ;
si la valeur de crête $S_{peak}$ dépasse le seuil prédéterminé :

produire une valeur de viscosité cinématique v sur la base de la valeur de crête $S_{peak}$ et sur la base de la valeur de moment S de la première série de gamme, la valeur de viscosité cinématique v étant indicative d'une viscosité cinématique du fluide s'écoulant dans le conduit (1) du débitmètre ;
produire un signal de viscosité cinématique à partir de la valeur de viscosité cinématique v ; et
transmettre le signal de viscosité cinématique à un circuit de sortie (13).

6. La méthode selon l'une des revendications 1 à 4, dans laquelle la méthode comprend les étapes suivantes :

comparer la valeur de crête $S_{peak}$ à un seuil prédéterminé ;
si la valeur de crête $S_{peak}$ dépasse le seuil prédéterminé :

produire une deuxième série de gamme de valeurs en tant que sous-ensemble de la série de valeurs dans le domaine de la fréquence ;
dans laquelle la deuxième série de gamme diffère de la première série de gamme;
déterminer une valeur de moment $M$ de la deuxième série de gamme;
produire une valeur de viscosité cinématique v sur la base de la valeur de crête $S_{peak}$ et sur la base de la valeur de moment $M$ de la deuxième série de gamme, la valeur de viscosité cinématique v étant indicative d'une viscosité cinématique du fluide s'écoulant dans le conduit (1) du débitmètre ;
produire un signal de viscosité cinématique à partir de la valeur de viscosité cinématique v ; et
transmettre le signal de viscosité cinématique à un circuit de sortie (13).

7. Méthode selon l'une des revendications 1 à 6,

la série dans le domaine de fréquence comprend une série de fréquence et une série de valeurs ;
où chaque valeur de la série du domaine de la fréquence est associée à une fréquence de la série du domaine de la fréquence ;
la méthode comprenant les étapes suivantes
comparer la valeur de crête $S_{peak}$ à un seuil prédéterminé ;
si la valeur de crête $S_{peak}$ dépasse le seuil prédéterminé :

identifier une fréquence de crête $f_{peak}$ en tant que fréquence de la série du domaine de la fréquence associée à la valeur de crête $S_{peak}$ ; et
mettre en correspondance la fréquence de crête $f_{peak}$ avec un débit dérivé de la fréquence, le débit dérivé de la fréquence étant indicatif du débit du fluide s'écoulant dans le conduit (1) du débitmètre.

8. Méthode selon la revendication 7, comprenant les étapes suivantes :
si la valeur de crête $S_{peak}$ dépasse le seuil prédéterminé :

comparer le débit dérivé de la fréquence au débit dérivé de la gamme;
si le débit dérivé de la fréquence et le débit dérivé de la gamme diffèrent de moins d'une deuxième marge d'erreur :

produire un second débit de sortie basé sur au moins l'un des débits dérivés de la fréquence et de la gamme, le second débit de sortie étant indicatif du débit du fluide s'écoulant dans le conduit (1) du débitmètre ;
produire un second signal de sortie à partir du second débit de sortie ; et
transmettre le second signal de sortie à un circuit de sortie (13).

9. La méthode selon l'une des revendications 7 à 8, la méthode comprenant les étapes suivantes :
si la valeur de crête $S_{peak}$ dépasse le seuil prédéterminé :

comparer le débit dérivé de la fréquence au débit dérivé de la gamme;
si le débit dérivé de la fréquence et le débit dérivé de la gamme diffèrent de moins d'une deuxième marge d'erreur:

produire un second débit de sortie basé sur au moins l'un des débits dérivés de la fréquence et de la gamme; et

utiliser le second débit de sortie pour régler la position d'un élément d'une vanne.

10. La méthode selon l'une des revendications 7 à 9, la méthode comprenant les étapes suivantes :
si la valeur de crête $S_{peak}$ dépasse le seuil prédéterminé :

comparer le débit dérivé de la fréquence au débit dérivé de la gamme ;
si le débit dérivé de la fréquence et le débit dérivé de la gamme diffèrent de plus d'une deuxième marge d'erreur :

produire un deuxième signal d'erreur ; et transmettre le deuxième signal d'erreur à un circuit de sortie (13).

11. La méthode selon l'une des revendications 1 à 10, la méthode comprenant les étapes suivantes :

enregistrer plusieurs séries de signaux dans le domaine temporel à partir d'un capteur (4), le capteur (4) étant situé à l'intérieur et/ou s'étendant dans un conduit (1) d'un débitmètre à tourbillon ;
produire une pluralité de séries de valeurs dans le domaine temporel en produisant une série de valeurs dans le domaine temporel à partir de chaque série de signaux dans le domaine temporel de la pluralité de séries de signaux dans le domaine temporel ;
produire une pluralité de séries dans le domaine de fréquence en produisant une série dans le domaine de fréquence à partir de chaque série de valeurs dans le domaine temporel de la pluralité de séries de valeurs dans le domaine temporel ;
dans laquelle chaque série du domaine de fréquence de la pluralité de séries du domaine de fréquence comprend une série de fréquences et une série de valeurs, chaque valeur de la série de valeurs étant associée à une fréquence de la série de fréquences ;
produire une pluralité de valeurs de crête $S_{peak}$ en déterminant pour chaque série de domaine de fréquence de la pluralité de séries de domaine de fréquence une valeur de crête $S_{peak}$ comme étant la plus grande valeur de la série de domaine de fréquence ;
produire une pluralité de fréquences de crête $f_{peak}$ en identifiant pour chaque série du domaine de fréquence de la pluralité de séries du domaine de fréquence une fréquence de crête $f_{peak}$ qui est associée à la valeur de crête $S_{peak}$ de la série du domaine de fréquence;
déterminer une pluralité de débits dérivés de la fréquence en mettant en correspondance chaque fréquence de crête $f_{peak}$ de la pluralité de fréquences de crête $f_{peak}$ avec un débit dérivé de la fréquence, chaque débit dérivé de la fréquence de la pluralité de débits dérivés de la fréquence étant indicatif du débit du fluide s'écoulant dans le conduit (1) du débitmètre ;
utiliser la pluralité de valeurs de crête $S_{peak}$ et la pluralité de débits dérivés de la fréquence pour déterminer les paramètres d'une deuxième fonction $Q_2$ ($S_{peak}$), la deuxième fonction $Q_2$ ($S_{peak}$) établissant une correspondance entre les valeurs de crête $S_{peak}$ et les débits dérivés de la crête ; et
enregistrer les paramètres de la deuxième fonction $Q_2$ ($S_{peak}$) dans une mémoire non volatile

12. La méthode selon l'une des revendications 1 à 11, la méthode comprenant les étapes suivantes :

enregistrer plusieurs séries de signaux dans le domaine temporel à partir d'un capteur (4), le capteur (4) étant situé à l'intérieur et/ou s'étendant dans un conduit (1) d'un débitmètre à tourbillon ;
produire une pluralité de séries de valeurs dans le domaine temporel en produisant une série de valeurs dans le domaine temporel à partir de chaque série de signaux dans le domaine temporel de la pluralité de séries de signaux dans le domaine temporel ;
produire une pluralité de séries dans le domaine de fréquence en produisant une série dans le domaine de fréquence à partir de chaque série de valeurs dans le domaine temporel de la pluralité de séries de valeurs dans le domaine temporel ;
dans laquelle chaque série du domaine de fréquence de la pluralité de séries du domaine de fréquence comprend une série de fréquences et une série de valeurs, chaque valeur de la série de valeurs étant associée à une fréquence de la série de fréquences ;
produire une pluralité de séries de troisième gamme en déterminant pour chaque série de domaine de fréquence de la pluralité de séries de domaine de fréquence une série de troisième gamme en tant que sous-ensemble de la série de domaine de fréquence;
déterminer une pluralité de valeurs de moment $S$ en déterminant pour chaque série de troisième gamme de la pluralité de séries de troisième gamme une valeur de moment $S$ de la série de troisième gamme;
déterminer une pluralité de débits dérivés de la fréquence en mettant en correspondance chaque fréquence de crête $f_{peak}$ de la pluralité de fréquences de crête $f_{peak}$ avec un débit dérivé de la fréquence, chaque débit dérivé de la fréquence de la pluralité de débits dérivés de la fréquence étant indicatif du débit du fluide s'écoulant dans le conduit (1) du débitmètre ;
utiliser la pluralité de valeurs de moment $S$ et la pluralité de débits dérivés de la fréquence pour déterminer les paramètres $k_1$, $k_2$, $Q_{0,3}$ d'une troisième fonction $Q_3$ $(S)$, la troisième fonction $Q_3$ $(S)$ établissant une correspondance entre les valeurs de moment $S$ et les débits dérivés de la gamme; et
enregistrer les paramètres $k_1$, $k_2$, $Q_{0,3}$ de la troisième fonction $Q_3$ $(S)$ dans une mémoire non volatile.

13. Support tangible lisible par une machine sur lequel est stocké un ensemble d'instructions qui, lorsqu'elles sont exécutées par un ou plusieurs processeurs d'un débitmètre à vortex, amènent le ou les processeurs à exécuter la méthode selon l'une des revendications 1 à 12.

FIG 1

FIG 2

EP 3 879 236 B1

FIG 3

FIG 4

FIG 5

FIG 6

FIG 7

## REFERENCES CITED IN THE DESCRIPTION

### Patent documents cited in the description

- WO 1991010114 A1
- WO 2011119420 A2
- EP 0666467 B1
- EP 0666467 A2
- WO 1998043051 A2
- WO 9843051 A2
- US 20060217899 A1
- US 20110314929 A1
- US 20180023986 A1
- CN 105571659 B
- US 20150122049 A1